(19)

Europäisches
Patentamt
European
Patent Office
Office européen
des brevets

(11)  **EP 4 317 514 A1**

(12)  **EUROPEAN PATENT APPLICATION**
published in accordance with Art. 153(4) EPC

(43) Date of publication:
07.02.2024 Bulletin 2024/06

(21) Application number: 22779096.1

(22) Date of filing: 31.03.2022

(51) International Patent Classification (IPC):
$C22C\ 38/14^{(2006.01)}$    $C23C\ 2/06^{(2006.01)}$
$C22C\ 38/12^{(2006.01)}$    $C23C\ 2/12^{(2006.01)}$
$C22C\ 38/04^{(2006.01)}$    $C21D\ 8/02^{(2006.01)}$

(52) Cooperative Patent Classification (CPC):
C21D 8/02; C22C 38/04; C22C 38/12; C22C 38/14;
C23C 2/06; C23C 2/12

(86) International application number:
PCT/CN2022/084541

(87) International publication number:
WO 2022/206916 (06.10.2022 Gazette 2022/40)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 02.04.2021 CN 202110360484
02.04.2021 CN 202110360493

(71) Applicant: BAOSHAN IRON & STEEL CO., LTD.
Shanghai 201900 (CN)

(72) Inventors:
• LI, Jun
Shanghai 201900 (CN)
• WANG, Jian
Shanghai 201900 (CN)
• DU, Xiaofeng
Shanghai 201900 (CN)
• DING, Zhilong
Shanghai 201900 (CN)
• ZHANG, Liyang
Shanghai 201900 (CN)
• LIU, Huafei
Shanghai 201900 (CN)
• WANG, Xiaojian
Shanghai 201900 (CN)
• YANG, Yi
Shanghai 201900 (CN)
• XIE, Zihao
Shanghai 201900 (CN)

(74) Representative: Kuhnen & Wacker
Patent- und Rechtsanwaltsbüro PartG mbB
Prinz-Ludwig-Straße 40A
85354 Freising (DE)

(54) **HOT-DIPPED ALUMINUM-ZINC OR HOT-DIPPED ZINC-ALUMINUM-MAGNESIUM MULTIPHASE STEEL HAVING YIELD STRENGTH OF GREATER THAN OR EQUAL TO 450 MPA AND RAPID HEAT-TREATMENT HOT PLATING MANUFACTURING METHOD THEREFOR**

(57) A hot-dipped aluminum-zinc or zinc-aluminum-magnesium multiphase steel having a yield strength of greater than or equal to 450 MPa and a rapid heat-treatment hot plating manufacturing method therefor. The steel comprises the following components, in percentage by weight: 0.06-0.12% of C, 0.05-0.30% of Si, 1.0-1.8% of Mn, P≤0.015%, S≤0.015%, N≤0.04%, Cr≤0.50%, and further comprises one or both of Ti or Nb, with 0-0.045% of Nb and 0-0.045% of Ti, the balance being Fe and other unavoidable impurities. In addition, the following conditions also need to be met: 0.25≤(C+Mn/6)≤0.40; Mn/S≥150; when no Ti is contained, Nb meets 0.01%≤(Nb-0.22C-1.1N)≤0.03%; when no Nb is contained, Ti meets 0.3≤Ti/C≤0.6; and when Ti and Nb are added in a compound mode, 0.03% ≤(Ti+Nb)≤0.07%. According to the present invention, the obtained hot-dipped aluminum-zinc or hot-dipped zinc-aluminum-magnesium steel plate has a yield strength ≥ 450 MPa, a tensile strength ≥ 500 MPa and an elongation ≥ 14%, and also has good strength, toughness and corrosion resistance. The production method therefor has a low cost and a high yield. The steel plate can be used for steel structure buildings such as roofs and walls, and used in household appliances, photovoltaic industries, etc.

EP 4 317 514 A1

Fig. 1

## Description

### Technical Field

The present invention belongs to the field of rapid heat-treatment technology for materials, and specifically relates to a hot-dipped aluminum-zinc or zinc-aluminum-magnesium multiphase steel having a yield strength of greater than or equal to 450 MPa and a manufacturing method therefor.

### Background

The application of hot-dipped steel plates has developed from architecture to high-level industries such as household appliances. Therefore, higher requirements have been put forward for the quality of hot-dipped steel plates, including internal quality and surface quality. Hot-dip steel plates are required to have better corrosion resistance, higher strength, better surface quality, bright and diverse colors, and lower costs. High strength hot-dipped aluminum-zinc and zinc-aluminum-magnesium products have good corrosion resistance, mechanical properties, forming performance, heat reflection performance, and surface darkening resistance, and they are increasingly widely used in the fields of architecture and household appliances.

Currently, the domestic products of hot-dipped aluminum-zinc and zinc-aluminum-magnesium with high yield strength and tensile strength have low elongation due to the limitations of process equipment, which greatly affects the application range of the products. The strength of products with better elongation can't meet the current demand for high strength.

Chinese Patent Application 200710093976.8 disclosed "Hot-dipped Aluminum-zinc Steel Plate for Deep Drawing And Production Method Therefor", which uses IF steel as the substrate to produce hot-dipped aluminum-zinc products. The steel is ultra-low carbon steel as the C content thereof is ≤ 0.01%. The steel has a yield strength of 140-220MPa, a tensile strength of 260-350MPa, and an elongation ≥ 30%. Although the steel plate has good tensile properties and forming performance, the strength level thereof is not enough, which greatly affects its applicability.

Chinese Patent Application 201710323599.6 discloses "A Hot-dipped Aluminum-Zinc Steel Plate Having Yield Strength Grade Of 550MPa And Manufacturing Method Therefor". The substrate comprises the following components: C: 0.05-0.06%, Si: 0-0.05%, Mn: 1.0-1.2%, P: 0-0.015%, Nb: 0.061-0.08%. The metallographic structure thereof is fibrous ferrite-cementite and fine niobium carbide precipitates. The elongation after fracture is 10-18%. The microstructure of the hot-dipped aluminum-zinc steel plate proposed in this patent has adverse effects on forming, with low elongation as well as high production costs due to the addition of more Nb.

Chinese Patent Application 201710994660.X discloses "550MPa Grade Structural Hot-dipped Aluminum-zinc Steel Plate And Preparation Method Therefor". The steel comprises the following components: C: 0.02-0.07%, Si ≤ 0.03%, Mn: 0.15-0.30%, P ≤ 0.020%, Si ≤ 0.020%, Nb: 0.015-0.030%, Als: 0.020-0.070%. Cold rolling is performed using a low cold rolling reduction rate of 55-60%. It has a yield strength of 550MPa or more, a tensile strength of 560MPa, and an elongation of about 10%. The steel plate proposed in this patent has the problem of low elongation and high yield strength, which will influence the subsequent processing.

Chinese Patent CN102363857B disclosed "A Production Method For Structural Color Coated Sheet Having Yield Strength of 550MPa", wherein Ti and Nb are at most 0.05% and 0.045% respectively; its yield strength $Rp_{0.2}$ reaches 550-600MPa, the tensile strength $R_m$ is 560-610MPa, and the elongation after fracture A80mm is ≥ 6%. Strengthening is mainly done by low-temperature annealing to keep most of the un-recrystallized banded structure to increase the strength, but the plasticity is poor, which also affects the forming.

Chinese Patent CN100529141C discloses "A Full Hard Aluminum-zinc Plated Steel Plate And Production Method Therefor". The method proposes to prepare a steel plate with a yield strength of 600MPa and more, an elongation at break ≤ 7%, a total Ti and Nb content of 0.15-0.100%. The annealing temperature is controlled between 630-710 ° C to obtain a full hard steel plate. However, the elongation of the steel plate obtained by this method is too low to effectively meet the current processing requirements for forming performance.

Chinese Patent Application CN104060165A discloses "A Hot-dipped Aluminum-zinc Alloy Steel Plate". The steel comprises the following components: C: 0.04-0.12%, Mn: 0.2-0.6%, P: 0.02-0.1%, S ≤ 0.015%, Ti: 0.01-0.05%, Al: 0.02-0.07%, Si ≤ 0.05%. Rolling process is performed with a hot-rolling finish-rolling entry temperature of 950-1100 °C, a finishing rolling temperature of 820-900 °C, a coiling temperature of 600-700 ° C, and a cold rolling total reduction rate of 50-80%. Continuous annealing is performed with an annealing temperature of 680-820 °C. For the hot-dip aluminum-zinc plating process, the invention adopts a trace titanium-treatment resulting in limited strength levels and significant fluctuations in strength, which makes it difficult for stable production.

Chinese Patent Application CN105063484A discloses "High Elongation Hot-dipped Aluminum-zinc And Color Coated Steel Plate Having Yield Strength 500MP level And Manufacturing Method Therefor". The steel comprises the following chemical components, in percentage by weight: C: 0.07 - 0.15%, Si: 0.02 - 0.15%, Mn: 1.3 - 1.8%, S ≤ 0.01%, N ≤ 0.004%, Ti ≤ 0.15%, Nb ≤ 0.050%, the balance being Fe and other unavoidable impurities. In addition, the following conditions also need to be met: (C+Mn/6)≥0.3%; when no Ti is contained, Nb meets 0.01%≤(Nb-0.22C-1.1N)≤0.05%; when no Nb is contained, Ti meets 0.5≤Ti/C≤1.5; and when Ti and Nb are added in a compound mode, 0.04% ≤(Ti+Nb)≤0.2%. According to the invention, the obtained hot-dipped aluminum-zinc and color coated steel plate has a yield strength ≥ 450 MPa, a tensile strength ≥ 500 MPa and an elongation ≥ 14%. The steel plates also have good strength, toughness and corrosion resistance. The production method therefor has a low cost and a high yield. The steel plate can be used for steel structure buildings such as roofs and walls, and electrical equipment such as household appliances. Conventional processes are used in the invention for production, while rapid heat-treatment processes are not involved.

The relevant patents of hot-dipped zinc-aluminum-magnesium mainly focus on the process and composition of the plating layer. For example, Chinese Patent Application CN103361588A discloses "Production Method Of Low Magnesium And Low Aluminum Zinc-Aluminum-Magnesium Plating Steel Plate And Plating Steel Plate Thereof". The method shows that the steel plate is immersed in molten zinc after annealing at a plating bath temperature of zinc alloy melting point plus 40-200 °C for a plating time of 2-10 seconds with an immersing temperature of the steel plate of the plating bath temperature to (the plating bath temperature+50 °C). The cooling rate after plating is 10-50 °C/s. The chemical components of the bath comprise Al: 1.0-2.4%, Mg: 1.0-2.0%, and Al/Mg >_ 1.

Chinese Patent Application CN106811686A discloses "High Strength Zinc-aluminum-magnesium Plating Steel Plate With Good Surface Quality And Manufacturing method Therefor". The steel plate comprises the following chemical components: C: 0.09-0.18%, Si: 0.40-1.60%, Mn: 0.80-2.10%, S: 0.001-0.008%, and may further comprises Cr: 0.01-0.60%, and/or Mo: 0.01-0.30%. The chemical components of the plating layer comprise Al: 1-14%, Mg: 1.0-5.0%, the balance being Zn and other unavoidable impurities. Although this patent proposes a method for producing a high-strength zinc-aluminum-magnesium plating steel plate, the production cost is high. Besides, high Si content tends to cause surface quality problems, high yield strength and low elongation, which may affect subsequent processing and forming.

In summary, current hot-dipped aluminum-zinc and zinc-aluminum-magnesium products have problems such as high cost, bad surface quality, poor matching of strength or elongation, resulting in poor subsequent processing and forming performance, as well as low wind uplift resistance.

## Summary

The purpose of the present invention is to provide a hot-dipped aluminum-zinc or zinc-aluminum-magnesium multiphase steel having a yield strength of greater than or equal to 450 MPa and a rapid heat-treatment hot plating manufacturing method therefor. The obtained hot-dipped aluminum-zinc or hot-dipped zinc-aluminum-magnesium multiphase steel has a yield strength ≥ 450 MPa, a tensile strength ≥ 500 MPa and an elongation ≥ 14%. The steel also has good wind uplift resistance, high corrosion resistance, strength, and extensibility. The steel can be used for steel structure buildings such as roofs and walls, and electrical equipment such as household appliances.

To achieve the above object, the present invention provides the following technical solutions.

A hot-dipped aluminum-zinc or hot-dipped zinc-aluminum-magnesium multiphase steel having a yield strength of greater than or equal to 450 MPa comprises the following components, in percentage by weight: 0.06-0.12% of C, 0.05-0.30% of Si, 1.0-1.8% of Mn, P≤0.015%, S≤0.015%, such as ≤0.012%, N≤0.04%, Cr≤0.50%, such as 0.25-0.50% or ≤0.40%, and further comprises one or both of Ti or Nb, with 0-0.045% (such as 0-0.035%) of Nb and 0-0.045%(such as 0-0.035%) of Ti, the balance being Fe and other unavoidable impurities; in addition, the following conditions also need to be met:

$$0.25 \leq (C+Mn/6) \leq 0.40;$$

$$Mn/S \geq 150;$$

when no Ti is contained, Nb meets 0.01%≤(Nb-0.22C-1.1N)≤0.03%;
when no Nb is contained, Ti meets 0.3≤Ti/C≤0.6;
when both Ti and Nb are contained, 0.03% ≤(Ti+Nb)≤0.07%.

In some embodiments, the content of C is 0.06-0.10% or 0.075-0.12%.
In some embodiments, the content of Mn is 1.0-1.6% or 1.2-1.8%.
In some embodiments, Si≤0.012%.
In some embodiments, the content of Cr is ≤ 0.40%, or 0.25-0.5%.

In some embodiments, the content of Nb is 0-0.035%.

In some embodiments, the content of Ti is 0-0.035%.

In some embodiments, $0.25 \leq (C+Mn/6) \leq 0.35$. In some embodiments, $0.30 \leq (C+Mn/6) \leq 0.40$.

In some embodiments, when no Nb is contained, Ti meets $0.3 \leq Ti/C \leq 0.5$, or meets $0.4 \leq Ti/C \leq 0.6$.

In some embodiments, when both Ti and Nb are contained, $0.03\% \leq (Ti+Nb) \leq 0.06\%$, or $0.05\% \leq (Ti+Nb) \leq 0.07\%$.

Preferably, the hot-dipped aluminum-zinc or hot-dipped zinc-aluminum-magnesium multiphase steel having a yield strength of greater than or equal to 450 MPa according to the present invention is obtained by the following process:

1) Smelting and casting
smelting and casting the above-mentioned chemical components into slabs;
2) Hot rolling and cooling
the hot rolling tapping temperature: 1150-1250 °C, such as 1170-1250°C, the hot rolling finishing temperature: 830-890°C, such as 850-890°C, the coiling temperature: 550-680 °C, such as 520-650°C or 550-680°C; after rolling, using laminar flow cooling with a laminar flow front section rapid cooling rate of 80-120 °C/s;
3) Pickling and cold rolling
after cooling, pickling the surface of strip steel to clean the mill scale, the cumulative cold rolling reduction rate being 60-80%;
4) Continuous annealing, hot-dipping aluminum-zinc, or hot-dipping zinc-aluminum-magnesium

performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section;
when one-stage rapid heating is used, the heating rate is 30-300 °C/s;
when two-stage rapid heating is used, heating is performed from room temperature to 550-625°C, such as 550-620°C, at a heating rate of 10-300°C/s in the first stage, and from 550-625°C, such as 550-620°C, to 750-850°C, such as 750-840°C or 770-850°C, at a heating rate of 30-300°C/s in the second stage;
afterwards, performing soaking at a soaking temperature of 750-840 °C, such as 750-840°C or 770-850°C, for a soaking time of 1-20s; then rapidly cooling to 550-600 °C at a cooling rate of 30-150 °C/s; performing hot-dipping aluminum-zinc or hot-dipping zinc-aluminum-magnesium;
after hot-dipping aluminum-zinc, cooling to room temperature at a cooling rate of 30-200 °C/s to obtain hot-dipped aluminum-zinc AZ products; or
after hot-dipping zinc-aluminum-magnesium, cooling to room temperature at a cooling rate of 30-180 °C/s to obtain hot-dipped zinc-aluminum-magnesium AM products;

5) Finishing and straightening
the temper rolling rate: $0.25\% \pm 0.2$, the straightening rate: $0.2\% \pm 0.2$.

Preferably, the content of C is 0.06-0.08% or 0.08-0.10%.

Preferably, the content of Si is 0.15-0.30%.

Preferably, the content of Mn is 1.0-1.3% or 1.2-1.6%.

Preferably, the whole process of the continuous annealing, hot-dipping aluminum-zinc, or hot-dipping zinc-aluminum-magnesium takes a time of 22-80.5s, such as 22-80s or 23-66s.

Preferably, in step 2), the hot rolling tapping temperature is 1180-1220 °C.

Preferably, in step 2), the hot rolling finishing temperature is 850-880 °C, such as 850-870 °C or 860-880 °C.

Preferably, in step 2), the coiling temperature is 550-620 °C or 570-620 °C.

Preferably, in step 2), the laminar flow front section rapid cooling rate is 100-120°C/s.

Preferably, in step 3), the cold rolling cumulative reduction rate is 60-70%.

Preferably, in step 4), when one-stage heating is used in the rapid heating, the heating rate is 50-300 °C/s.

Preferably, in step 4), when two-stage rapid heating is used in the rapid heating, the heating is performed from room temperature to 550-620°C or 550-625°C at a heating rate of 30-300°C/s in the first stage, and from 550-620°C or 550-625°C to 760-840°C or 770-850°C at a heating rate of 50-300°C/s in the second stage.

According to the present invention, the microstructure of the hot-dipped aluminum-zinc or hot-dipped zinc-aluminum-magnesium multiphase steel is a multiphase structure comprising at least three types of structures selected from ferrite, martensite, bainite, micron-scale precipitated carbides, and ribbon grains. The size of the micron-scale precipitated carbide is generally 0.1-1 micron.

According to the present invention, the hot-dipped aluminum-zinc or hot-dipped zinc-aluminum-magnesium multiphase steel has a yield strength ≥ 450MPa, a tensile strength ≥ 500MPa, and an elongation ≥ 14%.

According to the present invention, the hot-dipped aluminum-zinc or hot-dipped zinc-aluminum-magnesium multiphase steel has a surface of homogenous silver white spangle, with the spangle size controlled within 0.1-6.0mm.

In some embodiments, according to the present invention, the hot-dipped aluminum-zinc or hot-dipped zinc-aluminum-magnesium multiphase steel having a yield strength ≥ 450MPa comprises the following components, in percentage by weight: 0.06-0.10% of C, 0.05-0.30% of Si, 1.0-1.6% of Mn, P≤0.015%, S≤0.015%, N≤0.04%, such as ≤0.005% or 0.0005-0.005%, Cr≤0.40%, such as 0.05-0.40%, and further comprises one or both of Ti or Nb, with 0-0.035% of Nb and 0-0.035% of Ti, the balance being Fe and other unavoidable impurities; in addition, the following conditions also need to be met: 0.25≤(C+Mn/6)≤0.35; Mn/S≥150; when no Ti is contained, Nb meets 0.01%≤(Nb-0.22C-1.1N)≤0.03%; when no Nb is contained, Ti meets 0.3≤Ti/C≤0.5; and when both Ti and Nb are contained, 0.03%≤(Ti+Nb)≤0.06%. Preferably, in the hot-dipped aluminum-zinc or hot-dipped zinc-aluminum-magnesium multiphase steel, the content of C is 0.06-0.08%; preferably, the content of Si is 0.15-0.30%; preferably, the content of Mn is 1.0-1.3%; Preferably, the hot-dipped aluminum-zinc or hot-dipped zinc-aluminum-magnesium multiphase steel has a yield strength ≥ 450 MPa, a tensile strength ≥ 500 MPa and an elongation ≥ 20%; preferably, the hot-dipped aluminum-zinc or hot-dipped zinc-aluminum-magnesium multiphase steel has a yield strength of 450-515 MPa, such as 450-540 MPa, a tensile strength of 510-590 MPa, such as 510-580 MPa, an elongation of 20-26.5%, such as 21-26%. Preferably, the hot-dipped aluminum-zinc or hot-dipped zinc-aluminum-magnesium multiphase steel is obtained by the following process:

a) Smelting and casting

smelting and casting the above-mentioned chemical components into slabs;

b) Hot rolling and cooling

the hot rolling tapping temperature: 1150-1250 °C, the hot rolling finishing temperature: 830-890°C, the coiling temperature: 520-650 °C; after rolling, using laminar flow cooling with a laminar flow front section rapid cooling rate of 80-120 °C/s;

c) Pickling and cold rolling

after cooling, pickling the surface of strip steel to clean the mill scale; the cumulative cold rolling reduction rate being 60-80%;

d) Continuous annealing, hot-dipping aluminum-zinc, or hot-dipping zinc-aluminum-magnesium

performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section;

when one-stage rapid heating is used, the heating rate is 30-300 °C/s;

when two-stage rapid heating is used, heating is performed from room temperature to 550-625°C at a heating rate of 10-300°C/s in the first stage, and from 550-625°C to 750-840°C at a heating rate of 30-300°C/s in the second stage;

afterwards, performing soaking at a soaking temperature of 750-840 °C for a soaking time of 1-20s; then cooling to 550-600 °C at a cooling rate of 30-150 °C/s; performing hot-dipping aluminum-zinc or hot-dipping zinc-aluminum-magnesium;

after hot-dipping aluminum-zinc, cooling to room temperature at a cooling rate of 30-200 °C/s to obtain hot-dipped aluminum-zinc AZ products; or

after hot-dipping zinc-aluminum-magnesium, cooling to room temperature at a cooling rate of 30-180 °C/s to obtain hot-dipped zinc-aluminum-magnesium AM products;

e) Finishing and straightening

the temper rolling rate: 0.25% ± 0.2, the straightening rate: 0.2% ± 0.2.

Preferably, the whole process of the continuous annealing, hot-dipping aluminum-zinc, or hot-dipping zinc-aluminum-magnesium in step d) takes a time of 23-66.5s, such as 23-66s. Preferably, in step b), the hot rolling tapping temperature is 1180-1220 °C. Preferably, in step b), the hot rolling finishing temperature is 850-870 °C. Preferably, in step b), the coiling temperature is 550-620 °C. Preferably, in step b), the laminar flow front section rapid cooling rate is 100-120°C/s. Preferably, in step c), the cold rolling cumulative reduction rate is 60-70%. Preferably, in step d), when one-stage heating is used in the rapid heating, the heating rate is 50-300 °C/s. Preferably, in step d), when two-stage heating is used in the rapid heating, the heating is performed from room temperature to 550-625°C at a heating rate of 30-300°C/s in the first stage, and from 550-625°C to 760-840°C at a heating rate of 50-300°C/s in the second stage.

In some embodiments, according to the present invention, the hot-dipped aluminum-zinc or hot-dipped zinc-aluminum-magnesium multiphase steel having a yield strength of greater than or equal to 450 MPa comprises the following components, in percentage by weight: 0.075-0.12% of C, 0.05-0.30% of Si, 1.2-1.8% of Mn, P≤0.015%, S≤0.012%, N≤0.04%, such as ≤0.01% or 0.001-0.01%, 0.25-0.50% of Cr, and further comprises one or both of Ti or Nb, with 0-0.045% of Nb and 0-0.045% of Ti, the balance being Fe and other unavoidable impurities; in addition, the following conditions also need to be met: 0.30≤(C+Mn/6)≤0.40; Mn/S≥150; when no Ti is contained, Nb meets 0.01%≤(Nb-0.22C-1.1N)≤0.03%; when no Nb is contained, Ti meets 0.4≤Ti/C≤0.6; and when both Ti and Nb are contained, 0.05% ≤(Ti+Nb)≤0.07%. The hot-dipped aluminum-zinc or hot-dipped zinc-aluminum-magnesium multiphase steel having a yield strength of greater than or equal to 450 MPa has a yield strength ≥550MPa. Preferably, in the hot-dipped aluminum-zinc or hot-dipped zinc-aluminum-magnesium multiphase steel having a yield strength of greater than or equal to 450 MPa, the content of C is 0.08-0.10%; preferably, the content of Si is 0.15-0.30%; and preferably, the content of Mn is 1.2-1.6%. Preferably, the hot-dipped aluminum-zinc or hot-dipped zinc-aluminum-magnesium multiphase steel has a yield strength ≥ 550 MPa, a tensile strength ≥ 600 MPa and an elongation ≥ 14%. Preferably, the hot-dipped aluminum-zinc or hot-dipped zinc-aluminum-magnesium multiphase steel has a yield strength of 550-625 MPa, such as 550-615 MPa, a tensile strength of 615-700 MPa, an elongation of 14-17.5%, such as 14-17%. Preferably, the hot-dipped aluminum-zinc or hot-dipped zinc-aluminum-magnesium multiphase steel is obtained by the following process:

A) Smelting and casting
smelting and casting the above-mentioned chemical components into slabs;
B) Hot rolling and cooling
the hot rolling tapping temperature: 1170-1250 °C, the hot rolling finishing temperature: 845-890°C, such as 850-890°C, the coiling temperature: 550-680 °C; after rolling, using laminar flow cooling with a laminar flow front section rapid cooling rate of 80-120 °C/s;
C) Pickling and cold rolling
after cooling, pickling the surface of strip steel to clean the mill scale; the cumulative cold rolling reduction rate being 60-80%;
D) Continuous annealing, hot-dipping aluminum-zinc, or hot-dipping zinc-aluminum-magnesium

performing continuous annealing in the non-oxidation continuous annealing aluminum-zinc plating or zinc-aluminum-magnesium plating furnace; the annealing treatment sequentially including a heating section, a soaking section and a pre-plating cooling section; wherein, one-stage or two-stage heating is used in the heating section;
when one-stage rapid heating is used, the heating rate is 30-300 °C/s;
when two-stage rapid heating is used, heating is performed from room temperature to 550-620°C at a heating rate of 10-300°C/s in the first stage, and from 550-620°C to 770-850°C at a heating rate of 30-300°C/s in the second stage;
afterwards, performing soaking at a soaking temperature of 770-850 °C for a soaking time of 1-20s; then rapidly cooling to 550-600 °C at a cooling rate of 30-150 °C/s; performing hot-dipping aluminum-zinc or hot-dipping zinc-aluminum-magnesium;
after hot-dipping aluminum-zinc, cooling to room temperature at a cooling rate of 30-200 °C/s to obtain hot-dipped aluminum-zinc AZ products; or
after hot-dipping zinc-aluminum-magnesium, cooling to room temperature at a cooling rate of 30-180 °C/s to obtain hot-dipped zinc-aluminum-magnesium AM products;

5) Finishing and straightening
the temper rolling rate: 0.25% ± 0.2, the straightening rate: 0.2% ± 0.2.

Preferably, the whole process of the continuous annealing, hot-dipping aluminum-zinc, or hot-dipping zinc-aluminum-magnesium in step D) takes a time of 22-80.5s, such as 22-80s. Preferably, in step B), the hot rolling tapping temperature is 1180-1220 °C. Preferably, in step B), the hot rolling finishing temperature is 860-880 °C. Preferably, in step B), the coiling temperature is 570-620 °C. Preferably, in step B), the laminar flow front section rapid cooling rate is 100-120°C/s. Preferably, in step C), the cold rolling cumulative reduction rate is 60-70%. Preferably, in step D), when one-stage heating is used in the rapid heating, the heating rate is 50-300 °C/s. Preferably, in step D), when two-stage heating is used in the rapid heating, the heating is performed from room temperature to 550-620°C at a heating rate of 30-300°C/s in the first stage, and from 550-620°C to 770-850°C at a heating rate of 50-300°C/s in the second stage.

In the composition of the steel designed according to the present invention:

Carbon (C): Carbon is the most common strengthening element in steel, which increases the strength of steel and decreases the plasticity of steel. Therefore, the carbon content should not be excessive. The carbon content has a significant impact on the mechanical properties of steel. As the carbon content increases, the number of pearlite will increase, which greatly improves the strength and hardness of the steel while greatly decreases the plasticity and toughness thereof. If the carbon content is too high, there will be significant network carbides present in the steel. The presence of network carbides will significantly reduce the strength, plasticity, and toughness of the steel. The strengthening effect caused by the increase of carbon content in the steel may also be significantly reduced, resulting in deteriorated welding and forming process performance of the steel. Thus, the carbon content should be minimized as much as possible while ensuring the strength. As a result, in the present invention, the C content is controlled within 0.06-0.12%.

Silicon (Si): Silicon forms solid solution in ferrite or austenite, thereby enhancing the yield strength and tensile strength of steel. Moreover, silicon, a beneficial element in alloy steel, may increase the cold work deformation hardening rate of steel. In addition, there is a significant enrichment phenomenon of silicon on the intergranular fracture surface of silicon manganese steel. The segregation of silicon at grain boundaries may alleviate the distribution of carbon and phosphorus along grain boundaries, thereby improving the embrittlement state of grain boundaries. Silicon may enhance the strength, hardness, and wear resistance of steel without significantly reducing its plasticity. Silicon has a strong ability to deoxygenate and is commonly used as a deoxidizer in steelmaking. Silicon may also increase the fluidity of molten steel, so it is generally contained in steel. However, when the silicon content in the steel is too high, the plasticity and toughness thereof may significantly decrease. Excessive silicon content may form oxide scale defects on the surface and seriously affect the surface wetting behavior of strip steel during hot plating. Therefore, in the present invention, the Si content is controlled between 0.05-0.30%.

Manganese (Mn): Manganese, as a typical austenite stabilizing element, may significantly increases the hardenability of steel and reduces the critical cooling rate for the formation of bainite and martensite, thereby effectively decreasing the cooling rate of the rapid cooling stage during the annealing process, which is beneficial for obtaining bainite or martensite structure. Mn is a cheap element that stabilizes austenite and strengthens alloys. Manganese decreases the $\gamma$-$\alpha$ phase transition temperature mainly through solid solution strengthening, so as to promote grain refinement, thereby changing the microstructure after phase transition. Manganese, as a $\gamma$ phase region expanding element, may lower the critical points of $A_3$ and Al. However, high manganese content (>2.0%) may not only delays the transformation of pearlite, but also delays the transformation of bainite, making the "process window" smaller and the bainite zone shifted to the right, thereby increasing the sensitivity of steel to process conditions, which is not conducive to stable batch production. Low manganese content tends to cause pearlite transformation, making it difficult to form a sufficient amount of bainite in the structure.

The strength of the material is simply represented as carbon equivalent through the statistical analysis of a large amount of experimental data, therefore the present invention requires $0.25 \leq (C+Mn/6) \leq 0.40$. In addition, Mn can be infinitely miscible in steel, and Mn mainly plays a solid solution strengthening effect. Due to a certain residual amount of S element in the molten steel, S element has negative effects such as increasing the hot brittleness of the slab and deteriorating the mechanical properties of the steel. In order to reduce the negative effects of S, the Mn/S ratio in the steel plate is increased so that Mn/S is $\geq$ 150, so as to effectively reduce the negative effects of S. Therefore, in the present invention, the manganese content is limited within 1.0-1.8%.

Chromium (Cr): The role of chromium in multiphase steel is mainly reflected in its ability to increase the stability of austenite and the hardenability of steel. These two opposite effects together affect and constrain the volume fraction of martensite in chromium containing steel. At lower cooling rates, chromium mainly affects the stability of undercooling austenite; at higher cooling rates, chromium mainly affects the volume fraction of austenite. The addition of chromium on the one hand plays a role in solid solution strengthening, on the other hand, it can change the morphology and distribution of martensite by changing the phase transformation temperature of the steel, thereby increasing the strength and plasticity of the steel. However, chromium is the most effective element in delaying bainite transformation. Its effect on delaying bainite transformation is much greater than that on delaying pearlite transformation. Thus, chromium should be added to the steel in an appropriate amount. Therefore, in the present invention, the chromium content is limited within 0.50%.

Titanium (Ti): Titanium is a strong carbide-forming element. Adding trace amount of titanium to steel is beneficial for fixing N in the steel. The formed TiN may prevent excessive growth of austenite grains during slab heating, thereby achieving the goal of refining the original austenite grains. Titanium in steel may also react with carbon and sulfur to form compounds such as TiC, TiS, and $Ti_4C_2S_2$, which exist in the form of inclusions and second phase particles. These carbon nitride precipitates of titanium may prevent grain growth in the heat affected zone during welding, thereby improving the welding performance of the finished steel plate, meanwhile playing a role in precipitation strengthening in steel. When Ti is added alone, the composition is designed to be $0.3 \leq Ti/C \leq 0.6$, which makes a large amount of special carbide TiC forming as a good dispersion strengthening reinforcement.

Nb: Nb may significantly increase the recrystallization temperature of steel and achieve grain refinement. During the hot rolling process, the strain-induced precipitation of niobium carbides may hinder the recovery and recrystallization of deformed austenite. After controlled rolling and cooling the microstructure of deformed austenite, fine phase transformation products are obtained. Meanwhile, during the annealing process, fine precipitates of niobium carbonitride may play a role in precipitation strengthening. Therefore, niobium should be added to the steel in a small amount. When no Ti is contained, in order to ensure that Nb element can achieve better precipitation strengthening effect, while avoid adding too much Nb element to deteriorate the precipitation effect, it is necessary to meet the requirement of $0.01\% \leq$ (Nb-0.22C-1.1N) $\leq 0.03\%$ for Nb in the absence of Ti.

When microalloy element Ti and Nb are added in a compound mode in the present invention, fine precipitates with strengthening effects such as Nb (C, N), TiC, TiN, (Ti, Nb) (C, N) may be formed to strengthen the matrix. The presence thereof in form of carbides, nitrides, and carbonitrides may prevent the growth of austenite grains and increase the coarsening temperature of steel. The dispersed small particles of carbides and nitrides may fix the austenite grain boundaries to hinder the migration of austenite grain boundaries, thereby increasing the recrystallization temperature of austenite so as to expand the unrecrystallized zone. i.e. prevent the growth of austenite grains. Adding trace amount of Nb and Ti to steel may, on the one hand, reduce carbon equivalent content while increasing the strength to improve the welding performance of the steel, on the other hand, fix impure substances such as oxygen, nitrogen, sulfur to improve the weldability of steel. When Ti and Nb are added in a compound mode, $0.03\% \leq$ (Ti+Nb) $\leq 0.07\%$ is controlled to ensure the best strengthening effect.

A rapid heat-treatment hot plating manufacturing method for the hot-dipped aluminum-zinc or hot-dipped zinc-aluminum-magnesium multiphase steel having a yield strength of greater than or equal to 450 MPa according to the present invention comprises the following steps:

1) Smelting and casting
smelting and casting the above-mentioned chemical components into slabs;
2) Hot rolling and cooling
the hot rolling tapping temperature: 1150-1250 °C, the hot rolling finishing temperature: 830-890°C, the coiling temperature: 520-680 °C; after rolling, using laminar flow cooling with a laminar flow front section rapid cooling rate of 80-120 °C/s;
3) Pickling and cold rolling
after cooling, pickling the surface of strip steel to clean the mill scale, the cumulative cold rolling reduction rate being 60-80%;
4) Continuous annealing, hot-dipping aluminum-zinc, or hot-dipping zinc-aluminum-magnesium

    a. Continuous annealing

        performing continuous annealing in the non-oxidation continuous annealing aluminum-zinc plating or zinc-aluminum-magnesium plating furnace; the annealing treatment sequentially including a heating section, a soaking section and a pre-plating cooling section; wherein, one-stage or two-stage heating is used in the heating section;
        when one-stage rapid heating is used, the heating rate is 30-300 °C/s;
        when two-stage rapid heating is used, the heating is performed from room temperature to 550-625°C at a heating rate of 10-300°C/s in the first stage, and from 550-625°C to 750-850°C at a heating rate of 30-300°C/s in the second stage;
        afterwards, performing soaking at a soaking temperature of 750-850 °C for a soaking time of 1-20s; then rapidly cooling to 550-600 °C at a cooling rate of 30-150 °C/s;

    b. Hot-dipping aluminum-zinc or hot-dipping zinc-aluminum-magnesium

        after annealing, performing hot-dipping aluminum-zinc at a temperature of 550-600 °C; afterwards, rapidly cooling from 550-600 °C to room temperature at a cooling rate of 30-200 °C/s to obtain hot-dipped aluminum-zinc AZ products; or
        after annealing, performing hot-dipping zinc-aluminum-magnesium at a temperature of 550-600 °C; afterwards, rapidly cooling from 550-600 °C to room temperature at a cooling rate of 30-180 °C/s to obtain hot-dipped zinc-aluminum-magnesium AM products;

    5) Finishing and straightening
the temper rolling rate: 0.25% $\pm$ 0.2, the straightening rate: 0.2% $\pm$ 0.2.

Preferably, the whole process of the continuous annealing, hot-dipping aluminum-zinc, or hot-dipping zinc-aluminum-magnesium takes a time of 22-80s, such as 23-66s.

Preferably, in step 2), the hot rolling tapping temperature is 1180-1220 °C.

Preferably, in step 2), the hot rolling finishing temperature is 850-870 °C or 860-880 °C.

Preferably, in step 2), the coiling temperature is 550-620 °C or 570-620 °C.

Preferably, in step 2), the laminar flow front section rapid cooling rate is 100-120°C/s.

Preferably, in step 3), the cold rolling cumulative reduction rate is 60-70%.

Preferably, in step 4), when one-stage heating is used in the rapid heating, the heating rate is 50-300 °C/s.

Preferably, in the step 4), when two-stage heating is used in the rapid heating, heating is performed from room temperature to 550-625°C, such as 550-620 °C, at a heating rate of 30-300°C/s in the first stage; and from 550-625°C, such as 550-620 °C, to 750-840°C at a heating rate of 50-300°C/s in the second stage.

Preferably, in the soaking process of step 4), after heating the strip steel or steel plate to the target temperature of austenite and ferrite two-phase area, the temperature is kept constant for soaking.

Preferably, in the soaking process of step 4), the strip steel or steel plate is subjected to a small increase in temperature or a small decrease in temperature during the soaking time period with the temperature not exceeding 850°C after the temperature increase and not falling below 750°C after the temperature decrease.

Preferably, the soaking time period is 10-20s.

In some embodiments, the method comprises the steps of:

a) Smelting and casting

smelting and casting the above-mentioned chemical components into slabs;

b) Hot rolling and cooling

the hot rolling tapping temperature: 1150-1250 °C, the hot rolling finishing temperature: 830-890°C, the coiling temperature: 520-650 °C; after rolling, using laminar flow cooling with a laminar flow front section rapid cooling rate of 80-120 °C/s;

c) Pickling and cold rolling

after cooling, pickling the surface of strip steel to clean the mill scale; the cumulative cold rolling reduction rate being 60-80%;

d) Continuous annealing, hot-dipping aluminum-zinc, or hot-dipping zinc-aluminum-magnesium

a. Continuous annealing

performing continuous annealing in the non-oxidation continuous annealing aluminum-zinc plating or zinc-aluminum-magnesium plating furnace; the annealing treatment sequentially including a heating section, a soaking section and a pre-plating cooling section; wherein, one-stage or two-stage heating is used in the heating section;

when one-stage rapid heating is used, the heating rate is 30-300 °C/s;

when two-stage rapid heating is used, heating is performed from room temperature to 550-625°C at a heating rate of 10-300°C/s in the first stage, and from 550-625°C to 750-840°C at a heating rate of 30-300°C/s in the second stage;

afterwards, performing soaking at a soaking temperature of 750-840 °C for a soaking time of 1-20s; then rapidly cooling to 550-600 °C at a cooling rate of 30-150 °C/s;

b. Hot-dipping aluminum-zinc or hot-dipping zinc-aluminum-magnesium

after annealing, performing hot-dipping aluminum-zinc at a temperature of 550-600 °C; afterwards, rapidly cooling from 550-600 °C to room temperature at a cooling rate of 30-200 °C/s to obtain hot-dipped aluminum-zinc AZ products; or

after annealing, performing hot-dipping zinc-aluminum-magnesium at a temperature of 550-600 °C; then rapidly cooling from 550-600 °C to room temperature at a cooling rate of 30-180 °C/s to obtain hot-dipped zinc-aluminum-magnesium AM products;

e) Finishing and straightening

the temper rolling rate: 0.25% ± 0.2, the straightening rate: 0.2% ± 0.2.

Preferably, the whole process of the continuous annealing, hot-dipping aluminum-zinc, or hot-dipping zinc-aluminum-magnesium in step d) takes a time of 23-66s. Preferably, in step d), the hot rolling tapping temperature is 1180-1220 °C. Preferably, in step b), the hot rolling finishing temperature is 850-870 °C. Preferably, in step b), the coiling temperature is 550-620 °C. Preferably, in step b), the laminar flow front section rapid cooling rate is 100-120°C/s. Preferably, in step c), the cold rolling cumulative reduction rate is 60-70%. Preferably, in step d), when one-stage heating is used in the rapid heating, the heating rate is 50-300 °C/s. Preferably, in step d), when two-stage heating is used in the rapid heating, the heating is performed from room temperature to 550-625°C at a heating rate of 30-300°C/s in the first stage, and from 550-625°C to 750-840°C at a heating rate of 50-300°C/s in the second stage. Preferably, in the soaking process of step d), after heating the strip steel or steel plate to the target temperature of austenite and ferrite two-phase area, the temperature is kept constant for soaking. Preferably, in the soaking process of step d), the strip steel or steel plate is subjected to a small increase in temperature or a small decrease in temperature during the soaking time period with the temperature not exceeding 840°C after the temperature increase and not falling below 750°C after the temperature decrease. Preferably, the soaking time period is 10-20s.

In some embodiment, the method for manufacturing the hot-dipped aluminum-zinc or hot-dipped zinc-aluminum-magnesium multiphase steel having a yield strength of greater than or equal to 550 MPa described herein comprises the following steps:

A) Smelting and casting
smelting and casting the above-mentioned chemical components into slabs;
B) Hot rolling and cooling
the hot rolling tapping temperature: 1170-1250 °C, the hot rolling finishing temperature: 850-890°C, the coiling temperature: 550-680 °C; after rolling, using laminar flow cooling with a laminar flow front section rapid cooling rate of 80-120 °C/s;
C) Pickling and cold rolling
after cooling, pickling the surface of strip steel to clean the mill scale; the cumulative cold rolling reduction rate being 60-80%;
D) Continuous annealing, hot-dipping aluminum-zinc, or hot-dipping zinc-aluminum-magnesium

    a. Continuous annealing

        performing continuous annealing in the non-oxidation continuous annealing aluminum-zinc plating or zinc-aluminum-magnesium plating furnace; the annealing treatment sequentially including a heating section, a soaking section and a pre-plating cooling section; wherein, one-stage or two-stage heating is used in the heating section;
        when one-stage rapid heating is used, the heating rate is 30-300 °C/s;
        when two-stage rapid heating is used, heating is performed from room temperature to 550-620°C at a heating rate of 10-300°C/s in the first stage, and from 550-620°C to 770-850°C at a heating rate of 30-300°C/s in the second stage;
        afterwards, performing soaking at a soaking temperature of 770-850 °C for a soaking time of 1-20s; then rapidly cooling to 550-600 °C at a cooling rate of 30-150 °C/s;

    b. Hot-dipping aluminum-zinc or hot-dipping zinc-aluminum-magnesium

        after annealing, performing hot-dipping aluminum-zinc at a temperature of 550-600 °C; then rapidly cooling from 550-600 °C to room temperature at a cooling rate of 30-200 °C/s to obtain hot-dipped aluminum-zinc AZ products; or
        after annealing, performing hot-dipping zinc-aluminum-magnesium at a temperature of 550-600 °C; then rapidly cooling from 550-600 °C to room temperature at a cooling rate of 30-180 °C/s to obtain hot-dipped zinc-aluminum-magnesium AM products;

E) Finishing and straightening
the temper rolling rate: 0.25% ± 0.2, the straightening rate: 0.2% ± 0.2.

Preferably, the whole process of the continuous annealing, hot-dipping aluminum-zinc, or hot-dipping zinc-aluminum-magnesium in step D) takes a time of 22-80s. Preferably, in step B), the hot rolling tapping temperature is 1180-1220 °C. Preferably, in step B), the hot rolling finishing temperature is 860-880 °C. Preferably, in step B), the coiling temperature is 570-620 °C. Preferably, in step B), the laminar flow front section rapid cooling rate is 100-120°C/s. Preferably, in step C), the cold rolling cumulative reduction rate is 60-70%. Preferably, in step D), when one-stage heating is used in the rapid heating, the heating rate is 50-300 °C/s. Preferably, in step D), when two-stage heating is used in the rapid heating, the heating is performed from room temperature to 550-620°C at a heating rate of 30-300°C/s in the first stage, and from 550-620°C to 770-850°C at a heating rate of 50-300°C/s in the second stage. Preferably, in the soaking process of step D), after heating the strip steel or steel plate to the target temperature of austenite and ferrite two-phase area, the temperature is kept constant for soaking. Preferably, in the soaking process of step D), the strip steel or steel plate is subjected to a small increase in temperature or a small decrease in temperature during the soaking time period with the temperature not exceeding 850°C after the temperature increase and not falling below 770°C after the temperature decrease. Preferably, the soaking time period is 10-20s.

In the manufacturing method of the present invention, direct fire rapid heating, short-term heat preservation, and rapid cooling method are used to achieve rapid heat-treatment, refine the structure, and improve strength and elongation.

According to the present invention, due to the significant increase in heating rate and the shortening of soaking time, the residence time of the hot-dipped zinc substrate material at high temperatures is significantly shortened. Therefore, the surface enrichment of high-strength steel alloy elements is reduced, the platability is enhanced and the surface quality is improved. In addition, the shortening of the length of furnace units (at least one-third shorter than traditional continuous annealing furnaces) and the reduction of furnace rollers significantly reduce the probability of surface defects such as furnace roller marks, pits, and scratches, and improve the surface quality of the products.

The present invention adopts direct fire heating to increase the heating rate and shorten the heat preservation time to 1-20s, thereby inhibiting the grain growth, achieving rapid heat treatment and refining grains. Due to the addition of alloys, high-strength low alloy steel is quite sensitive to annealing temperature, so the temperature and heat preservation time of each stage of the annealing should be strictly controlled.

During the annealing process of hot-dipping aluminum-zinc and zinc-aluminum-magnesium, fine precipitates hinder the pinning of dislocations and the migration of subgrain boundaries, inhibit the growth of recrystallized grains, refine the grains, and improve the yield strength and tensile strength of the steel, thereby strengthening the material and maintaining good plasticity.

After plating, cold aerosol spray method is used for rapid cooling to refine grains and obtain strengthening phases. Aerosol cooling is the process of adding fine droplets of water to the protective gas of spray cooling, which is jetted onto the surface of the strip steel at a certain angle and jet velocity, allowing greatly improvement in the heat exchange efficiency on the strip steel surface.

In the manufacturing method of the present invention, direct fire rapid heating, short-term heat preservation, and rapid cooling method are used to achieve rapid heat-treatment, refine the structure, and improve strength and elongation. After plating, cold spray or aerosol cooling method is used to refine grains and obtain strengthening phases.

Under the premise of controlling the cold rolling reduction rate between 60% and 80% with appropriate components and hot-rolling process, only by maintaining suitable cold rolling reduction can an ideal metallographic structure be obtained. Due to the little deformation energy storage at lower cold rolling reduction, recrystallization is less likely to occur during subsequent annealing. Therefore, a little cold rolled structure in an appropriate amount can be retained to increase the strength. A greater reduction rate of 60-80% can be used to accelerate recrystallization and improve plasticity.

After testing, the hot-dipped aluminum-zinc or zinc-aluminum-magnesium multiphase steel having a yield strength of greater than or equal to 450 MPa of the present invention has a yield strength of 450-615MPa, a tensile strength of 510-700MPa, and an elongation of 14-26%. The hot-dipped aluminum-zinc or zinc-aluminum-magnesium substrate has a multiphase structure comprising at least three types of structures selected from ferrite, martensite, bainite, ribbon grains, and micron-scale precipitated carbides.

Beneficial Effects of the Present Invention:

The present invention precisely formulates the components with controlling: $0.25 \leq (C+Mn/6) \leq 0.40$; Mn/S $\geq$ 150; when no Ti is contained, Nb meets $0.01\% \leq (Nb-0.22C-1.1N) \leq 0.03\%$; when no Nb is contained, Ti meets $0.3 \leq Ti/C \leq 0.6$; when both Ti and Nb are contained, $0.03\% \leq (Ti+Nb) \leq 0.07\%$, combined with a rapid heat treatment process, results in products with high strength and good plasticity. Compared to traditional hot-dipped aluminum-zinc or zinc-aluminum-magnesium high-strength steel, it has better strength, toughness, forming performance, and a significant competitive advantage in the market.

Meanwhile, due to the significant increase in heating rate and the shortening of soaking time, the residence time of the hot-dip galvanized substrate material at high temperatures is significantly shortened. Therefore, the surface enrichment of high-strength steel alloy elements is reduced, the platability is enhanced and the surface quality is improved. The shortening of the length of furnace units (at least one-third shorter than traditional continuous annealing furnaces) and the reduction of furnace rollers significantly reduce the probability of surface defects such as furnace roller marks, pits, and scratches, and improve the surface quality of the products.

The present invention does not require equipment modification and has a simple manufacturing process. According to the present invention, the hot-dipped aluminum-zinc or zinc-aluminum-magnesium products with high corrosion resistance, heat resistance, and excellent strength and toughness can be produced. In addition, the plating layer of steel according to the present invention is uniform, dense, and of appropriate thickness, which can be widely applied in industries such as architecture and household appliances, expanding a wide range of fields for the application of hot-dipped aluminum-zinc, zinc-aluminum-magnesium, and color-coated products.

**Description of Figures**

Figure 1 is a microstructure image of the steel substrate produced according to Example 1 from Test Steel A of Example I of the present invention.

Figure 2 is a microstructure image of the steel substrate produced according to Conventional Process 1 from Test Steel A of Example I of the present invention.

Figure 3 is a microstructure image of the steel substrate produced according to Example 7 from Test Steel A of Example I of the present invention.

Figure 4 is a microstructure image of the steel substrate produced according to Example 9 from Test Steel C of Example I of the present invention.

Figure 5 is a microstructure image of the steel substrate produced according to Example 10 from Test Steel D of Example I of the present invention.

Figure 6 is a microstructure image of the steel substrate produced according to Example 1 from Test Steel A of Example II of the present invention.

Figure 7 is a microstructure image of the steel substrate produced according to Conventional Process 1 from Test Steel A of Example II of the present invention.

Figure 8 is a microstructure image of the steel substrate produced according to Example 7 from Test Steel A of Example II of the present invention.

Figure 9 is a microstructure image of the steel substrate produced according to Example 11 from Test Steel E of Example II of the present invention.

Figure 10 is a microstructure image of the steel substrate produced according to Example 12 from Test Steel F of Example II of the present invention.

**Detailed Description**

The present invention will be further described below in conjunction with examples and figures. The examples are implemented on the premise of the technical solution of the present invention and provide detailed implementations and specific operation processes. But the protection scope of the present invention is not limited to the following examples.

In examples, the yield strength, tensile strength, and elongation were tested in accordance with the "GB/T228.1-2010 Metallic materials - Tensile testing - Part 1: Method of test at room temperature", using the P7 specimen for testing along the transverse direction.

Example I

Table 1 shows the composition of the test steel in the example. Table 2 shows the specific parameters of the one-stage rapid heating process in the example. Table 3 shows the specific parameters of the two-stage rapid heating process in the example. Table 4 shows the mechanical properties of the steel plate obtained by the process according to Table 2 from the test steel of the example. Table 5 shows the mechanical properties of the steel plate obtained by the process according to Table 3 from the test steel of the example.

It can be found from the example, the product of the present invention has a yield strength of 450-510MPa, a tensile strength of 510-580MPa, and an elongation of 21-26%. Through precise composition ratio and rapid heat-treatment process, high-strength and high elongation hot-dipped aluminum-zinc or zinc-aluminum-magnesium products are obtained, which own a significant market competitive advantage.

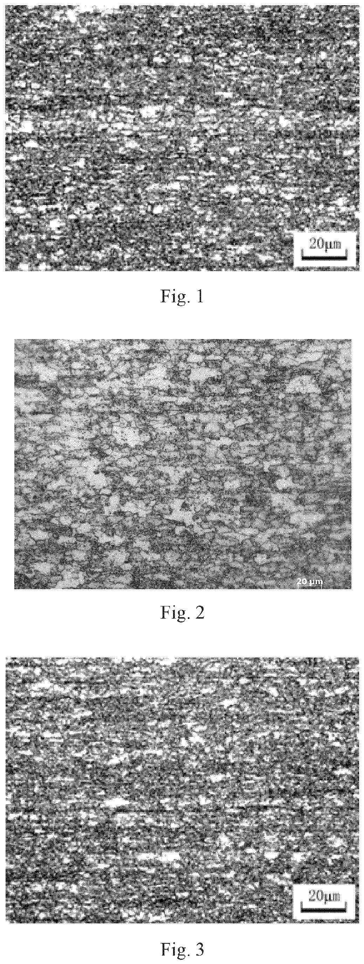

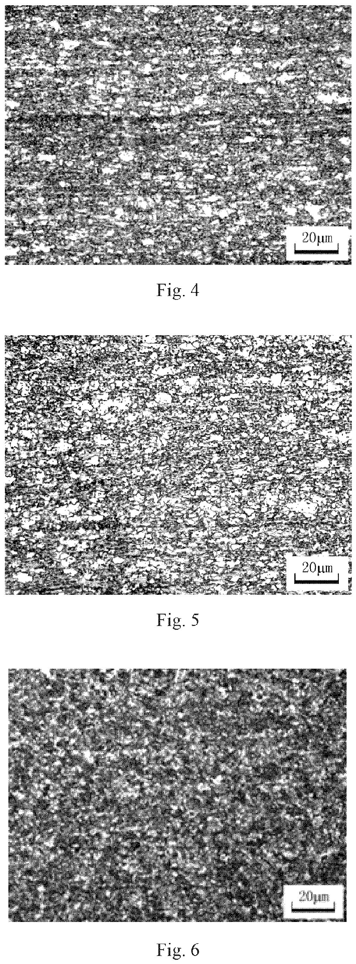

Figures 1 and 3 show the microstructure images of the multiphase steel produced according to Example 1 (one-stage rapid heating) and Example 7 (two-stage rapid heating) from Test Steel A in the example, respectively. Figure 2 shows the microstructure image of the multiphase steel obtained by the conventional process from Test Steel A in the example. Figure 4 shows the microstructure image of the multiphase steel produced according to Example 9 (two-stage rapid heating) from Test Steel C in the example; Figure 5 shows the microstructure image of the multiphase steel produced according to Example 10 (two-stage rapid heating) from Test Steel D in the example. As can be seen from Figs. 1, 3, 4, and 5, the microstructure of the multiphase steel treated according to the present invention has obvious characteristics such as fine grain size, homogeneous distribution of various phase structures and carbides. This is very beneficial for improving the strength, toughness, and forming performance of the material.

Table 1 (unit: mass percentage)

| Test Steel | C | Si | Mn | P | S | Nb | Ti | Cr | N |
|---|---|---|---|---|---|---|---|---|---|
| A | 0.07 | 0.15 | 1.4 | 0.010 | 0.007 | / | 0.035 | 0.40 | 0.0005 |
| B | 0.08 | 0.18 | 1.6 | 0.012 | 0.008 | 0.018 | 0.015 | 0.30 | 0.002 |
| C | 0.10 | 0.20 | 1.2 | 0.014 | 0.005 | 0.020 | 0.010 | 0.25 | 0.003 |
| D | 0.09 | 0.30 | 1.0 | 0.008 | 0.006 | 0.025 | 0.020 | 0.15 | 0.004 |
| E | 0.06 | 0.08 | 1.5 | 0.009 | 0.004 | 0.030 | 0.030 | 0.05 | 0.0025 |
| F | 0.10 | 0.15 | 1.1 | 0.011 | 0.003 | 0.035 | / | 0.38 | 0.001 |

Table 2

| | Hot rolling tapping temp. °C | Hot rolling finishing temp. °C | Coiling temp. °C | Laminar flow front section rapid cooling rate °C/s | Cold rolling cumulative reduction rate % | Continuous annealing (one-stage) | | | | | Hot dipping temp. °C | Cooling rate after plating °C/s | the whole time for rapid heat treatment, hot-dipping AZ or hot-dipping AM s |
| | | | | | | Rapid heating rate °C/s | Soaking temp. °C | Soaking time period s | Rapid cooling rate °C/s | Rapid cooling endpoint temp. °C | | | |
|---|---|---|---|---|---|---|---|---|---|---|---|---|---|
| Example 1 | 1150 | 870 | 550 | 80 | 60 | 50 | 820 | 10 | 80 | 550 | 550 | 100 | 34.7 |
| Example 2 | 1230 | 860 | 520 | 92 | 80 | 150 | 780 | 15 | 120 | 560 | 560 | 180 | 24.9 |
| Example 3 | 1250 | 890 | 600 | 112 | 72 | 250 | 840 | 8 | 30 | 575 | 575 | 200 | 22.9 |
| Example 4 | 1170 | 830 | 580 | 120 | 75 | 300 | 800 | 20 | 150 | 585 | 585 | 150 | 27.8 |
| Example 5 | 1200 | 850 | 620 | 105 | 65 | 100 | 790 | 5 | 50 | 590 | 590 | 80 | 23.8 |
| Example 6 | 1220 | 860 | 650 | 98 | 78 | 30 | 750 | 1 | 100 | 600 | 600 | 30 | 46.2 |
| Conv. Process 1 | 1230 | 860 | 650 | 75 | 70 | 11 | 770 | 160 | 40 | 585 | 585 | 30 | 251.6 |
| Conv. Process 2 | 1230 | 860 | 630 | 62 | 80 | 10 | 790 | 130 | 50 | 590 | 590 | 40 | 225.3 |
| Conv. Process 3 | 1250 | 890 | 600 | 72 | 72 | 11 | 810 | 110 | 45 | 597 | 597 | 35 | 203.0 |
| Conv. Process 4 | 1270 | 830 | 580 | 50 | 75 | 13 | 830 | 90 | 60 | 598 | 598 | 45 | 169.0 |

| | Hot rolling tapping temp. °C | Hot rolling finishing temp. °C | Coiling temp. °C | Laminar flow front section rapid cooling rate °C/s | Cold rolling cumulative reduction rate % | Continuous annealing (one-stage) | | | | | Hot dipping temp. °C | Cooling rate after plating °C/s | the whole time for rapid heat treatment, hot-dipping AZ or hot-dipping AM s |
|---|---|---|---|---|---|---|---|---|---|---|---|---|---|
| | | | | | | Rapid heating rate °C/s | Soaking temp. °C | Soaking time period s | Rapid cooling rate °C/s | Rapid cooling endpoint temp. °C | | | |
| Conv. Process 5 | 1200 | 850 | 620 | 75 | 80 | 15 | 845 | 70 | 50 | 586 | 586 | 25 | 152.8 |
| Conv. Process 6 | 1220 | 860 | 640 | 55 | 80 | 11 | 770 | 160 | 30 | 585 | 585 | 30 | 253.2 |

Table 3

| | Hot rolling tapping temp. °C | Hot rolling finishing temp. °C | Coiling temp. °C | Laminar flow front section rapid cooling rate °C/s | Cold rolling cumulative reduction rate % | Continuous annealing (two-stage) | | | | | | | Hot dipping temp. °C | Cooling rate after plating °C/s | the whole time for the rapid heat treatment, hot-dipping AZ or hot-dipping AM s |
|---|---|---|---|---|---|---|---|---|---|---|---|---|---|---|---|
| | | | | | | Heating rate of the first stage °C/s | Temp. after the first stage heating °C | Heating rate of the second stage °C/s | Soaking temp. °C | Soaking time period s | Rapid cooling rate °C/s | Rapid cooling endpoint temp. °C | | | |
| Example 7 | 1150 | 870 | 550 | 80 | 60 | 10 | 550 | 30 | 790 | 1 | 150 | 550 | 550 | 200 | 66.3 |
| Example 8 | 1230 | 860 | 520 | 92 | 80 | 30 | 560 | 150 | 750 | 5 | 120 | 560 | 560 | 100 | 31.3 |
| Example 9 | 1250 | 890 | 600 | 112 | 72 | 80 | 570 | 250 | 840 | 10 | 100 | 575 | 575 | 150 | 24.3 |
| Example 10 | 1180 | 830 | 580 | 120 | 75 | 150 | 600 | 300 | 785 | 12 | 80 | 585 | 585 | 70 | 27.1 |
| Example 11 | 1200 | 850 | 620 | 105 | 69 | 300 | 625 | 100 | 820 | 20 | 50 | 590 | 590 | 180 | 31.7 |
| Example 12 | 1220 | 880 | 650 | 98 | 65 | 200 | 580 | 50 | 770 | 18 | 30 | 600 | 600 | 30 | 50.1 |
| Conv. Process 7 | 1260 | 860 | 650 | 75 | 60 | 10 | 150 | 7 | 790 | 130 | 40 | 590 | 590 | 30 | 258.4 |
| Conv. Process 8 | 1230 | 860 | 630 | 62 | 80 | 11 | 180 | 6 | 810 | 110 | 50 | 597 | 597 | 40 | 248.2 |
| Conv. Process 9 | 1250 | 890 | 600 | 72 | 72 | 13 | 210 | 5 | 830 | 90 | 45 | 598 | 598 | 35 | 250.3 |
| Conv. Process 10 | 1270 | 830 | 580 | 50 | 75 | 15 | 250 | 5 | 845 | 70 | 60 | 586 | 586 | 45 | 221.2 |
| Conv. Process 11 | 1200 | 850 | 620 | 75 | 80 | 11 | 150 | 8 | 770 | 160 | 50 | 585 | 585 | 25 | 275.6 |

EP 4 317 514 A1

17

| | Hot rolling tapping temp. °C | Hot rolling finishing temp. °C | Coiling temp. °C | Laminar flow front section rapid cooling rate °C/s | Cold rolling cumulative reduction rate % | Continuous annealing (two-stage) | | | | | | | Hot dipping temp. °C | Cooling rate after plating °C/s | the whole time for the rapid heat treatment, hot-dipping AZ or hot-dipping AM s |
|---|---|---|---|---|---|---|---|---|---|---|---|---|---|---|---|
| | | | | | | Heating rate of the first stage °C/s | Temp. after the first stage heating °C | Heating rate of the second stage °C/s | Soaking temp. °C | Soaking time period s | Rapid cooling rate °C/s | Rapid cooling endpoint temp. °C | | | |
| Conv. Process 12 | 1220 | 860 | 640 | 55 | 80 | 10 | 150 | 7 | 790 | 130 | 30 | 600 | 600 | 30 | 260.1 |

EP 4 317 514 A1

Table 4

| No. | Test Steel | Main process parameters | Yield strength MPa | Tensile strength MPa | Elongation % |
|---|---|---|---|---|---|
| 1 | A | Example 1 | 485 | 538 | 23.4 |
| 2 | B | Example 2 | 505 | 555 | 22.2 |
| 3 | C | Example 3 | 505 | 565 | 22.0 |
| 4 | D | Example 4 | 510 | 580 | 21.2 |
| 5 | E | Example 5 | 470 | 530 | 24.8 |
| 6 | F | Example 6 | 455 | 515 | 26.1 |
| 7 | A | Conv. Process 1 | 423 | 518 | 22.0 |
| 8 | B | Conv. Process 2 | 422 | 510 | 23.0 |
| 9 | C | Conv. Process 3 | 430 | 515 | 22.8 |
| 10 | D | Conv. Process 4 | 418 | 508 | 24.6 |
| 11 | E | Conv. Process 5 | 415 | 502 | 24.5 |
| 12 | F | Conv. Process 6 | 412 | 492 | 25.5 |

Table 5

| No. | Test steel | Main process parameters | Yield strength MPa | Tensile strength MPa | Elongation % |
|---|---|---|---|---|---|
| 1 | A | Example 7 | 500 | 548 | 23.4 |
| 2 | B | Example 8 | 505 | 555 | 21.2 |
| 3 | C | Example 9 | 515 | 575 | 22.0 |
| 4 | D | Example 10 | 510 | 585 | 20.2 |
| 5 | E | Example 11 | 480 | 540 | 23.8 |
| 6 | F | Example 12 | 465 | 525 | 25.1 |
| 7 | A | Conv. Process 7 | 433 | 518 | 22.0 |
| 8 | B | Conv. Process 8 | 412 | 510 | 23.8 |
| 9 | C | Conv. Process 9 | 420 | 525 | 22.8 |
| 10 | D | Conv. Process 10 | 408 | 508 | 24.2 |
| 11 | E | Conv. Process 11 | 415 | 505 | 24.5 |
| 12 | F | Conv. Process 12 | 422 | 512 | 24.5 |

Example II

Table 6 shows the composition of the test steel in the example. Table 7 shows the specific parameters of the one-stage rapid heating process in the example. Table 8 shows the specific parameters of the two-stage rapid heating process in the example. Table 9 shows the mechanical properties of the steel plate obtained by the process according to Table 7 from the test steel of the example. Table 10 shows the mechanical properties of the steel plate obtained by the process according to Table 8 from the test steel of the example.

It can be found from the example, the product of the present invention has a yield strength of 550-615MPa, a tensile strength of 615-700MPa, and an elongation of 14-17%. Through precise composition ratio and rapid heat-treatment process, high-strength and high elongation hot-dipped aluminum-zinc or zinc-aluminum-magnesium products are obtained, which own a significant market competitive advantage.

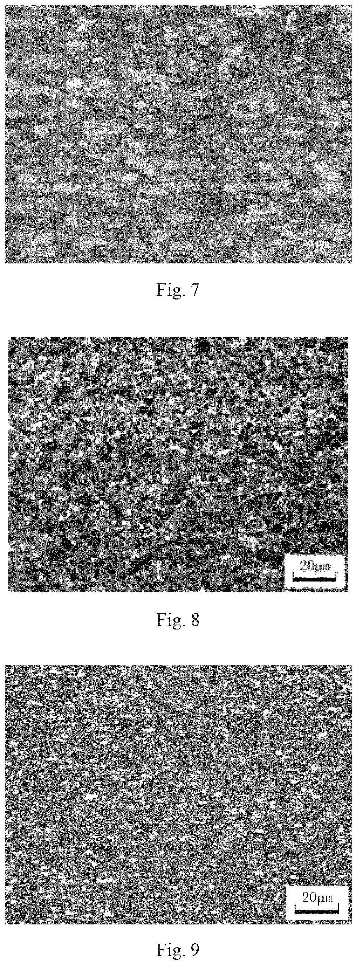

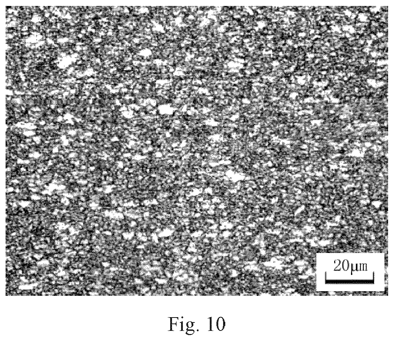

Figures 6 and 8 show the microstructure images of the multiphase steel produced according to Example 1 (one-stage rapid heating) and Example 7 (two-stage rapid heating) from Test Steel A, respectively. Figure 9 shows the microstructure image of the multiphase steel produced according to Example 11 (two-stage rapid heating) from Test Steel E in the example. Figure 10 shows the microstructure image of the multiphase steel produced according to Example 12 (two-stage rapid heating) from Test Steel F in the example. Figure 7 shows the microstructure image of the multiphase steel produced by the conventional process from Test Steel A in the example.

As can be seen from Figs. 6, 8, 9, and 10, the microstructure of the multiphase steel treated according to the present invention has obvious characteristics such as fine grain size, homogeneous distribution of various phase structures and carbides. This is very beneficial for improving the strength, toughness, and forming performance of the material.

Table 6 (unit: mass percentage)

| Steel No. | C | Si | Mn | P | s | Nb | Ti | Cr | N |
|---|---|---|---|---|---|---|---|---|---|
| A | 0.090 | 0.15 | 1.8 | 0.010 | 0.012 | / | 0.045 | 0.30 | 0.003 |
| B | 0.075 | 0.18 | 1.6 | 0.015 | 0.010 | 0.035 | 0.020 | 0.35 | 0.001 |
| C | 0.120 | 0.30 | 1.5 | 0.009 | 0.006 | 0.025 | 0.030 | 0.25 | 0.009 |
| D | 0.105 | 0.05 | 1.2 | 0.008 | 0.005 | 0.030 | 0.025 | 0.50 | 0.008 |
| E | 0.088 | 0.08 | 1.3 | 0.012 | 0.008 | 0.033 | 0.035 | 0.40 | 0.002 |
| F | 0.100 | 0.20 | 1.4 | 0.013 | 0.009 | 0.045 | / | 0.35 | 0.005 |

Table 7

| Example | Hot rolling tapping temp. °C | Hot rolling finishing temp. °C | Coiling temp. °C | Laminar flow front section rapid cooling rate °C/s | Cold rolling cumulative reduction rate % | Continuous annealing (one-stage) | | | | | Hot dipping temp. °C | Cooling rate after plating °C/s | the whole time for the rapid heat treatment, hot-dipping AZ or hot-dipping AM s |
| | | | | | | Rapid heating rate °C/s | Soaking temp. °C | Soaking time period s | Rapid cooling endpoint temp. °C | Rapid cooling rate °C/s | | | |
|---|---|---|---|---|---|---|---|---|---|---|---|---|---|
| Example 1 | 1220 | 880 | 580 | 80 | 60 | 30 | 790 | 1 | 550 | 80 | 550 | 200 | 32.3 |
| Example 2 | 1230 | 860 | 550 | 95 | 80 | 80 | 780 | 5 | 565 | 130 | 565 | 100 | 21.6 |
| Example 3 | 1250 | 890 | 600 | 115 | 72 | 200 | 835 | 20 | 570 | 100 | 570 | 150 | 30.4 |
| Example 4 | 1170 | 850 | 600 | 120 | 75 | 300 | 785 | 18 | 585 | 150 | 585 | 70 | 30.0 |
| Example 5 | 1200 | 845 | 680 | 100 | 79 | 100 | 770 | 15 | 590 | 60 | 590 | 180 | 28.7 |
| Example 6 | 1220 | 860 | 650 | 85 | 65 | 50 | 850 | 12 | 600 | 30 | 600 | 30 | 56.3 |
| Conv. Process 1 | 1220 | 880 | 580 | 75 | 60 | 15 | 845 | 70 | 586 | 40 | 586 | 40 | 145.6 |
| Conv. Process 2 | 1230 | 860 | 550 | 62 | 80 | 11 | 770 | 160 | 585 | 50 | 585 | 35 | 248.0 |
| Conv. Process 3 | 1250 | 890 | 600 | 72 | 72 | 10 | 790 | 130 | 600 | 45 | 600 | 45 | 224.1 |
| Conv. Process 4 | 1170 | 850 | 580 | 50 | 75 | 11 | 810 | 110 | 590 | 60 | 590 | 25 | 208.3 |

| Example | Hot rolling tapping temp. °C | Hot rolling finishing temp. °C | Coiling temp. °C | Laminar flow front section rapid cooling rate °C/s | Cold rolling cumulative reduction rate % | Continuous annealing (one-stage) | | | | | Hot dipping temp. °C | Cooling rate after plating °C/s | the whole time for the rapid heat treatment, hot-dipping AZ or hot-dipping AM s |
|---|---|---|---|---|---|---|---|---|---|---|---|---|---|
| | | | | | | Rapid heating rate °C/s | Soaking temp. °C | Soaking time period s | Rapid cooling endpoint temp. °C | Rapid cooling rate °C/s | | | |
| Conv. Process 5 | 1200 | 850 | 680 | 75 | 80 | 13 | 830 | 90 | 580 | 50 | 580 | 30 | 176.0 |
| Conv. Process 6 | 1220 | 860 | 650 | 55 | 80 | 15 | 845 | 70 | 585 | 30 | 585 | 30 | 152.5 |

Table 8

| Example | Hot rolling tapping temp. °C | Hot rolling finishing temp. °C | Coiling temp. °C | Laminar flow front section rapid cooling rate °C/s | Cold rolling cumulative reduction rate % | Continuous annealing (two-stage) | | | | | | | Hot dipping temp. °C | Cooling rate after plating °C/s | the whole time for the rapid heat treatment, hot-dipping AZ or hot-dipping AM s |
|---|---|---|---|---|---|---|---|---|---|---|---|---|---|---|---|
| | | | | | | Heating rate of the first stage °C/s | Temp. after the first stage heating °C | Heating rate of the second stage °C/s | Soaking temp. °C | Soaking time period s | Rapid cooling endpoint temp. °C | Rapid cooling rate °C/s | | | |
| Example 7 | 1230 | 860 | 550 | 80 | 60 | 200 | 560 | 30 | 790 | 18 | 550 | 30 | 550 | 200 | 39.0 |
| Example 8 | 1230 | 860 | 680 | 92 | 80 | 30 | 580 | 80 | 780 | 5 | 560 | 120 | 560 | 100 | 33.4 |
| Example 9 | 1250 | 890 | 600 | 112 | 72 | 80 | 570 | 250 | 850 | 10 | 575 | 100 | 575 | 150 | 24.4 |
| Example 10 | 1170 | 830 | 580 | 120 | 75 | 120 | 600 | 300 | 770 | 12 | 585 | 150 | 585 | 70 | 26.7 |
| Example 11 | 1200 | 850 | 620 | 105 | 80 | 300 | 620 | 100 | 820 | 20 | 590 | 80 | 590 | 180 | 30.0 |
| Example 12 | 1220 | 860 | 640 | 98 | 80 | 10 | 550 | 50 | 800 | 1 | 600 | 100 | 600 | 30 | 80.3 |
| Conv. Process 7 | 1230 | 860 | 550 | 75 | 68 | 15 | 250 | 5 | 845 | 70 | 586 | 40 | 586 | 30 | 229.7 |
| Conv. Process 8 | 1230 | 860 | 530 | 62 | 80 | 11 | 150 | 8 | 770 | 160 | 585 | 50 | 585 | 40 | 267.1 |
| Conv. Process 9 | 1250 | 890 | 600 | 72 | 72 | 10 | 150 | 7 | 790 | 130 | 600 | 45 | 600 | 35 | 255.2 |
| Conv. Process 10 | 1170 | 830 | 580 | 50 | 75 | 11 | 180 | 6 | 810 | 110 | 590 | 60 | 590 | 45 | 245.9 |
| Conv. Process 11 | 1200 | 850 | 620 | 75 | 80 | 13 | 210 | 5 | 830 | 90 | 580 | 50 | 580 | 25 | 256.0 |

(continued)

| Example | Hot rolling tapping temp. °C | Hot rolling finishing temp. °C | Coiling temp. °C | Laminar flow front section rapid cooling rate °C/s | Cold rolling cumulative reduction rate % | Continuous annealing (two-stage) | | | | | | | Hot dipping temp. °C | Cooling rate after plating °C/s | the whole time for the rapid heat treatment, hot-dipping AZ or hot-dipping AM s |
|---|---|---|---|---|---|---|---|---|---|---|---|---|---|---|---|
| | | | | | | Heating rate of the first stage °C/s | Temp. after the first stage heating °C | Heating rate of the second stage °C/s | Soaking temp. °C | Soaking time period s | Rapid cooling endpoint temp. °C | Rapid cooling rate °C/s | | | |
| Conv. Process 12 | 1220 | 860 | 640 | 55 | 80 | 15 | 250 | 5 | 845 | 70 | 585 | 30 | 585 | 30 | 231.8 |

Table 9

| No. | Test Steel | Main Process Parameter | Yield Strength MPa | Tensile Strength MPa | Elongation % |
|---|---|---|---|---|---|
| 1 | A | Example 1 | 585 | 638 | 16.4 |
| 2 | B | Example 2 | 600 | 655 | 15.4 |
| 3 | C | Example 3 | 570 | 665 | 15.0 |
| 4 | D | Example 4 | 605 | 660 | 15.2 |
| 5 | E | Example 5 | 615 | 700 | 14.8 |
| 6 | F | Example 6 | 565 | 615 | 17.1 |
| 7 | A | Conv. Process 1 | 505 | 605 | 15.5 |
| 8 | B | Conv. Process 2 | 515 | 610 | 15.4 |
| 9 | C | Conv. Process 3 | 491 | 595 | 17.0 |
| 10 | D | Conv. Process 4 | 510 | 600 | 15.2 |
| 11 | E | Conv. Process 5 | 503 | 585 | 16.5 |
| 12 | F | Conv. Process 6 | 515 | 580 | 18.8 |

Table 10

| No. | Test Steel | Main Process Parameter | Yield Strength MPa | Tensile Strength MPa | Elongation % |
|---|---|---|---|---|---|
| 1 | A | Example 7 | 595 | 638 | 15.4 |
| 2 | B | Example 8 | 600 | 645 | 15.2 |
| 3 | C | Example 9 | 580 | 655 | 15.0 |
| 4 | D | Example 10 | 615 | 670 | 15.2 |
| 5 | E | Example 11 | 625 | 700 | 14.8 |
| 6 | F | Example 12 | 595 | 618 | 16.1 |
| 7 | A | Conv. Process 7 | 515 | 608 | 16.4 |
| 8 | B | Conv. Process 8 | 510 | 605 | 16.2 |
| 9 | C | Conv. Process 9 | 500 | 588 | 17.0 |
| 10 | D | Conv. Process 10 | 509 | 610 | 15.2 |
| 11 | E | Conv. Process 11 | 501 | 595 | 17.8 |
| 12 | F | Conv. Process 12 | 515 | 580 | 18.1 |

**Claims**

1. A hot-dipped aluminum-zinc or hot-dipped zinc-aluminum-magnesium multiphase steel having a yield strength of greater than or equal to 450 MPa comprises the following components, in percentage by weight: 0.06-0.12% of C, 0.05-0.30% of Si, 1.0-1.8% of Mn, P≤0.015%, S≤0.015%, such as ≤0.012%, N≤0.04%, Cr≤0.50%, such as 0.25-0.50% or ≤0.40%, and further comprises one or both of Ti or Nb, with 0-0.045% of Nb, such as 0-0.035%, and 0-0.045% of Ti, such as 0-0.035%, the balance being Fe and other unavoidable impurities; in addition, the following conditions also need to be met:

$$0.25 \leq (C + Mn/6) \leq 0.40;$$

$$Mn/S \geq 150;$$

when no Ti is contained, Nb meets 0.01%≤(Nb-0.22C-1.1N)≤0.03%;
when no Nb is contained, Ti meets 0.3≤Ti/C≤0.6;
when both Ti and Nb are contained, 0.03% ≤(Ti+Nb)≤0.07%;
preferably, the hot-dipped aluminum-zinc or hot-dipped zinc-aluminum-magnesium multiphase steel having a yield strength of greater than or equal to 450 MPa is obtained by the following process:

1) Smelting and casting
smelting and casting the above-mentioned chemical components into slabs;
2) Hot rolling and cooling
the hot rolling tapping temperature: 1150-1250 °C, the hot rolling finishing temperature: 830-890°C, the coiling temperature: 520-680 °C; after rolling, using laminar flow cooling with a laminar flow front section rapid cooling rate of 80-120 °C/s;
3) Pickling and cold rolling
after cooling, pickling the surface of strip steel to clean the mill scale, the cold rolling cumulative reduction rate being 60-80%;
4) Continuous annealing, hot-dipping aluminum-zinc, or hot-dipping zinc-aluminum-magnesium

performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section; when one-stage rapid heating is used, the heating rate is 30-300 °C/s; when two-stage rapid heating is used, the heating is performed from room temperature to 550-625°C at a heating rate of 10-300°C/s in the first stage, and from 550-625°C to 750-850°C at a heating rate of 30-300°C/s in the second stage;
afterwards, performing soaking at a soaking temperature of 750-840 °C for a soaking time of 1-20s; then rapidly cooling to 550-600 °C at a cooling rate of 30-150 °C/s; performing hot-dipping aluminum-zinc or hot-dipping zinc-aluminum-magnesium;
after hot-dipping aluminum-zinc, cooling to room temperature at a cooling rate of 30-200 °C/s to obtain hot-dipped aluminum-zinc AZ products; or
after hot-dipping zinc-aluminum-magnesium, cooling to room temperature at a cooling rate of 30-180 °C/s to obtain hot-dipped zinc-aluminum-magnesium AM products;

5) Finishing and straightening
the temper rolling rate: 0.25% ± 0.2, the straightening rate: 0.2% ± 0.2.

2. The hot-dipped aluminum-zinc or hot-dipped zinc-aluminum-magnesium multiphase steel having a yield strength of greater than or equal to 450 MPa according to claim 1, wherein, the content of C is 0.06-0.10%, preferably 0.06-0.08%, or 0.075-0.12%, preferably 0.08-0.10%; and/or

the content of Si is 0.15-0.30%; and/or
the content of Mn is 1.0-1.6%, preferably 1.0-1.3%, or 1.2-1.8%, preferably 1.2-1.6%; and/or
the Si is ≤ 0.012%; and/or
the content of Cr ≤ 0.40%, or is 0.25-0.5%; and/or
the content of Nb is 0-0.035%; and/or
the content of Ti is 0-0.035%.

3. The hot-dipped aluminum-zinc or zinc-aluminum-magnesium multiphase steel having a yield strength of greater than or equal to 450 MPa according to claim 1 or 2, wherein,0.25≤(C+Mn/6)≤0.35, or 0.30≤(C+Mn/6)≤0.40; and/or when no Nb is contained, Ti meets 0.3≤Ti/C≤0.5, or meets 0.4≤Ti/C≤0.6; and/or when both Ti and Nb are contained, 0.03%≤(Ti+Nb)≤0.06%, or 0.05%≤(Ti+Nb)≤0.07%.

4. The hot-dipped aluminum-zinc or hot-dipped zinc-aluminum-magnesium multiphase steel having a yield strength of greater than or equal to 450 MPa according to any one of claims 1-3, wherein,

the hot-dipped aluminum-zinc or hot-dipped zinc-aluminum-magnesium multiphase steel has a microstructure of multiphase structure comprising at least three types of structures selected from ferrite, martensite, bainite, micron-scale precipitated carbides, and ribbon grains; and/or

the hot-dipped aluminum-zinc or hot-dipped zinc-aluminum-magnesium multiphase steel has a yield strength ≥ 450MPa, a tensile strength ≥ 500MPa, and an elongation ≥ 14%; and/or

the hot-dipped aluminum-zinc or hot-dipped zin_c-aluminum-magnesium multiphase steel has a surface of homogenous silver white spangle, with the spangle size of 0.1-6.0 mm.

5.  The hot-dipped aluminum-zinc or hot-dipped zinc-aluminum-magnesium multiphase steel having a yield strength of greater than or equal to 450 MPa according to any one of claims 1-4, wherein, the whole process of continuous annealing, hot-dipping aluminum-zinc or hot-dip zinc-aluminum-magnesium multiphase steel takes a time of 22-80.5s, such as 22-80s or 23-66s.

6.  The hot-dipped aluminum-zinc or hot-dipped zinc-aluminum-magnesium multiphase steel having a yield strength of greater than or equal to 450 MPa according to any one of claims 1-5, wherein,

    in the step 2), the hot rolling tapping temperature is 1180-1220 °C; and/or
    in the step 2), the hot rolling finishing temperature is 850-880 °C, such as 850-870 °C or 860-880 °C; and/or
    in the step 2), the coiling temperature is 550-620 °C or 570-620 °C; and/or
    in the step 2), the laminar flow front section rapid cooling rate is 100-120 °C/s; and/or
    in the step 3), the cold rolling cumulative reduction rate is 60-70%; and/or
    in the step 4), when one-stage heating is used in the rapid heating, the heating rate is 50-300°C/s; and/or
    in the step 4), when two-stage rapid heating is used in the rapid heating, the heating is performed from room temperature to 550-620°C or 550-625°C at a heating rate of 30-300°C/s in the first stage, and from 550-620°C or 550-625°C to 760-840°C or 770-850°C at a heating rate of 50-300°C/s in the second stage.

7.  The hot-dipped aluminum-zinc or hot-dipped zinc-aluminum-magnesium multiphase steel having a yield strength of greater than or equal to 450 MPa according to claim 1, wherein, the hot-dipped aluminum-zinc or hot-dipped zinc-aluminum-magnesium multiphase steel comprises the following components, in percentage by weight: 0.06-0.10% of C, 0.05-0.30% of Si, 1.0-1.6% of Mn, P≤0.015%, S≤0.015%, N≤0.04%, such as ≤0.005% or 0.0005-0.005%, Cr≤0.40%, such as 0.05-0.40%, and further comprises one or both of Ti or Nb, with 0-0.035% of Nb and 0-0.035% of Ti, the balance being Fe and other unavoidable impurities; in addition, the following conditions also need to be met:

    0.25≤(C+Mn/6)≤0.35; Mn/S≥150; when no Ti is contained, Nb meets 0.01%≤(Nb-0.22C-1.1N)≤0.03%; when no Nb is contained, Ti meets 0.3≤Ti/C≤0.5; and when both Ti and Nb are contained, 0.03% ≤(Ti+Nb)≤0.06%; preferably, in the hot-dipped aluminum-zinc or hot-dipped zinc-aluminum-magnesium multiphase steel, the content of C is 0.06-0.08%; preferably, the content of Si is 0.15-0.30%; and preferably, the content of Mn is 1.0-1.3%;
    preferably, the hot-dipped aluminum-zinc or hot-dipped zinc-aluminum-magnesium multiphase steel has a yield strength ≥ 450 MPa, a tensile strength ≥ 500 MPa and an elongation ≥ 20%; preferably, the hot-dipped aluminum-zinc or hot-dipped zinc-aluminum-magnesium multiphase steel has a yield strength of 450-515 MPa, such as 450-540 MPa, a tensile strength of 510-590 MPa, such as 510-580 MPa, an elongation of 20-26.5%, such as 21-26%.

8.  The hot-dipped aluminum-zinc or zinc-aluminum-magnesium multiphase steel having a yield strength of greater than or equal to 450 MPa according to claim 7, wherein, the hot-dipped aluminum-zinc or hot-dipped zinc-aluminum-magnesium multiphase steel is obtained by the following process:

    a) Smelting and casting
    smelting and casting the above-mentioned chemical components into slabs;
    b) Hot rolling and cooling
    the hot rolling tapping temperature: 1150-1250 °C, the hot rolling finishing temperature: 830-890 °C, the coiling temperature: 520-650 °C; after rolling, using laminar flow cooling with a laminar flow front section rapid cooling rate of 80-120 °C/s;
    c) Pickling and cold rolling
    after cooling, pickling the surface of strip steel to clean the mill scale, the cold rolling cumulative reduction rate being 60-80%;
    d) Continuous annealing, hot-dipping aluminum-zinc, or hot-dipping zinc-aluminum-magnesium
    performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section; when one-stage rapid heating is used, the heating rate is 30-300°C/s;

when two-stage rapid heating is used, the heating is performed from room temperature to 550-625°C at a heating rate of 10-300°C/s in the first stage, and from 550-625°C to 750-840°C at a heating rate of 30-300°C/s in the second stage;

afterwards, performing soaking at a soaking temperature of 750-840 °C for a soaking time of 1-20s; then cooling to 550-600 °C at a cooling rate of 30-150 °C/s; performing hot-dipping aluminum-zinc or hot-dipping zinc-aluminum-magnesium;

after hot-dipping aluminum-zinc, cooling to room temperature at a cooling rate of 30-200 °C/s to obtain hot-dipped aluminum-zinc AZ products; or

after hot-dipping zinc-aluminum-magnesium, cooling to room temperature at a cooling rate of 30-180 °C/s to obtain hot-dipped zinc-aluminum-magnesium AM products;

e) Finishing and straightening
the temper rolling rate: 0.25% ± 0.2, the straightening rate: 0.2% ± 0.2.

9. The hot-dipped aluminum-zinc or hot-dipped zinc-aluminum-magnesium multiphase steel having a yield strength of greater than or equal to 450 MPa according to claim 8, wherein, the whole process of the continuous annealing, hot-dipping aluminum-zinc, or hot-dipping zinc-aluminum-magnesium in step d) takes a time of 23-66.5s, such as 23-66s; and/or

in step b), the hot rolling tapping temperature is 1180-1220 °C; and/or
in step b), the hot rolling finishing temperature is 850-870 °C; and/or
in step b), the coiling temperature is 550-620 °C; and/or
in step b), the laminar flow front section rapid cooling rate is 100-120°C/s; and/or
in step c), the cold rolling cumulative reduction rate is 60-70%; and/or
in step d), when one-stage heating is used in the rapid heating, the heating rate is 50-300 °C/s; and/or
in step d), when two-stage heating is used in the rapid heating, the heating is performed from room temperature to 550-625°C at a heating rate of 30-300°C/s in the first stage, and from 550-625°C to 760-840°C at a heating rate of 50-300°C/s in the second stage.

10. The hot-dipped aluminum-zinc or hot-dipped zinc-aluminum-magnesium multiphase steel having a yield strength of greater than or equal to 450 MPa according to claim 1, wherein, the hot-dipped aluminum-zinc or hot-dipped zinc-aluminum-magnesium multiphase steel comprises the following components, in percentage by weight: 0.075-0.12% of C, 0.05-0.30% of Si, 1.2-1.8% of Mn, P≤0.015%, S≤0.012%, N≤0.04%, such as ≤0.01% or 0.001-0.01%, 0.25-0.50% of Cr, and further comprises one or both of Ti or Nb, with 0-0.045% of Nb and 0-0.045% of Ti, the balance being Fe and other unavoidable impurities; in addition, the following conditions also need to be met: $0.30 \leq (C+Mn/6) \leq 0.40$; $Mn/S \geq 150$; when no Ti is contained, Nb meets $0.01\% \leq (Nb-0.22C-1.1N) \leq 0.03\%$; when no Nb is contained, Ti meets $0.4 \leq Ti/C \leq 0.6$; and when both Ti and Nb are contained, $0.05\% \leq (Ti+Nb) \leq 0.07\%$;

preferably, the hot-dipped aluminum-zinc or hot-dipped zinc-aluminum-magnesium multiphase steel has a yield strength ≥ 550 MPa;

preferably, in the hot-dipped aluminum-zinc or hot-dipped zinc-aluminum-magnesium multiphase steel, the content of C is 0.08-0.10%; preferably, the content of Si is 0.15-0.30%; preferably, the content of Mn is 1.2-1.6%; preferably, the hot-dipped aluminum-zinc or hot-dipped zinc-aluminum-magnesium multiphase steel has a yield strength ≥ 550 MPa, a tensile strength ≥ 600 MPa and an elongation ≥ 14%; preferably, the hot-dipped aluminum-zinc or hot-dipped zinc-aluminum-magnesium multiphase steel has a yield strength of 550-625 MPa, such as 550-615 MPa, a tensile strength of 615-700 MPa, an elongation of 14-17.5%, such as 14-17%.

11. The hot-dipped aluminum-zinc or zinc-aluminum-magnesium multiphase steel having a yield strength of greater than or equal to 450 MPa according to claim 10, wherein, the hot-dipped aluminum-zinc or hot-dipped zinc-aluminum-magnesium multiphase steel is obtained by the following process:

A) Smelting and casting
smelting and casting the above-mentioned chemical components into slabs;
B) Hot rolling and cooling

The hot rolling tapping temperature: 1170-1250 °C, the hot rolling finishing temperature: 845-890°C, such as 850-890°C, the coiling temperature: 550-680 °C; after rolling, using laminar flow cooling with a laminar flow front section rapid cooling rate of 80-120 °C/s;

C) Pickling and cold rolling

after cooling, pickling the surface of strip steel to clean the mill scale, the cold rolling cumulative reduction rate being 60-80%;

D) Continuous annealing, hot-dipping aluminum-zinc, or hot-dipping zinc-aluminum-magnesium

performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section; when one-stage rapid heating is used, the heating rate is 30-300°C/s;

when two-stage rapid heating is used, the heating is performed from room temperature to 550-620°C at a heating rate of 10-300°C/s in the first stage, and from 550-620°C to 770-850°C at a heating rate of 30-300°C/s in the second stage;

afterwards, performing soaking at a soaking temperature of 770-850 °C for a soaking time of 1-20s; then rapidly cooling to 550-600 °C at a cooling rate of 30-150 °C/s; performing hot-dipping aluminum-zinc or hot-dipping zinc-aluminum-magnesium; after hot-dipping aluminum-zinc, cooling to room temperature at a cooling rate of 30-200 °C/s to obtain hot-dipped aluminum-zinc AZ products; or

after hot-dipping zinc-aluminum-magnesium, cooling to room temperature at a cooling rate of 30-180 °C/s to obtain hot-dipped zinc-aluminum-magnesium AM products;

5) Finishing and straightening

the temper rolling rate: 0.25% ± 0.2, the straightening rate: 0.2% ± 0.2.

12. The hot-dipped aluminum-zinc or hot-dipped zinc-aluminum-magnesium multiphase steel having a yield strength of greater than or equal to 450 MPa according to claim 11, wherein,

the whole process of the continuous annealing, hot-dipping aluminum-zinc, or hot-dipping zinc-aluminum-magnesium in step D) takes a time of 22-80.5s, such as 22-80s; and/or

in step B), the hot rolling tapping temperature is 1180-1220 °C; and/or

in step B), the hot rolling finishing temperature is 860-880 °C; and/or

in step B), the coiling temperature is 570-620 °C; and/or

in step B), the laminar flow front section rapid cooling rate is 100-120°C/s; and/or

in step C), the cold rolling cumulative reduction rate is 60-70%; and/or

in step D), when one-stage heating is used in the rapid heating, the heating rate is 50-300 °C/s; and/or

in step D), when two-stage heating is used in the rapid heating, the heating is performed from room temperature to 550-620°C at a heating rate of 30-300°C/s in the first stage, and from 550-620°C to 770-850°C at a heating rate of 50-300°C/s in the second stage.

13. A rapid heat-treatment hot plating manufacturing method for the hot-dipped aluminum-zinc or hot-dipped zinc-aluminum-magnesium multiphase steel having a yield strength of greater than or equal to 450 MPa according to claim 1 comprises the following steps:

1) Smelting and casting

smelting and casting the above-mentioned chemical components into slabs;

2) Hot rolling and cooling

the hot rolling tapping temperature: 1150-1250 °C, the hot rolling finishing temperature: 830-890°C, the coiling temperature: 520-680 °C; after rolling, using laminar flow cooling with a laminar flow cooling front section rapid cooling rate of 80-120 °C/s;

3) Pickling and cold rolling

after cooling, pickling the surface of strip steel to clean the mill scale, the cold rolling cumulative reduction rate being 60-80%;

4) Continuous annealing, hot-dipping aluminum-zinc, or hot-dipping zinc-aluminum-magnesium

a. Continuous annealing

performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section;
when one-stage rapid heating is used, the heating rate is 30-300 °C/s;
when two-stage rapid heating is used, heating is performed from room temperature to 550-625°C at a heating rate of 10-300°C/s in the first stage, and from 550-625°C to 750-850°C at a heating rate of 30-300°C/s in the second stage;
afterwards, performing soaking at a soaking temperature of 750-850 °C for a soaking time of 1-20s;
then rapidly cooling to 550-600 °C at a cooling rate of 30-150 °C/s;

b. Hot-dipping aluminum-zinc or hot-dipping zinc-aluminum-magnesium

after annealing, performing hot-dipping aluminum-zinc at a temperature of 550-600 °C; then rapidly cooling from 550-600 °C to room temperature at a cooling rate of 30-200 °C/s to obtain hot-dipped aluminum-zinc AZ products; or
after annealing, performing hot-dipping zinc-aluminum-magnesium at a temperature of 550-600 °C; then rapidly cooling from 550-600 °C to room temperature at a cooling rate of 30-180 °C/s to obtain hot-dipped zinc-aluminum-magnesium AM products;

5) Finishing and straightening
the temper rolling rate: 0.25% ± 0.2, the straightening rate: 0.2% ± 0.2.

14. The method according to claim 13, wherein,

the whole process of the continuous annealing, hot-dipping aluminum-zinc, or hot-dipping zinc-aluminum-magnesium takes a time of 22-80s, such as 23-66s; and/or
in step 2), the hot rolling tapping temperature is 1180-1220 °C; and/or
in step 2), the hot rolling finishing temperature is 850-870°C or 860-880 °C; and/or
in step 2), the coiling temperature is 550-620 °C or 570-620 °C; and/or
in step 2), the laminar flow front section rapid cooling rate is 100-120°C/s; and/or
in step 3), the cold rolling cumulative reduction rate is 60-70%; and/or
in step 4), when one-stage heating is used in the rapid heating, the heating rate is 50-300 °C/s; and/or
in step 4), when two-stage heating is used in the rapid heating, heating is performed from room temperature to 550-625°C, such as 550-620 °C, at a heating rate of 30-300°C/s in the first stage; and from 550-625°C, such as 550-620 °C, to 750-840°C at a heating rate of 50-300°C/s in the second stage; and/or
in the soaking process of step 4), after heating the strip steel or steel plate to the target temperature of austenite and ferrite two-phase area, the temperature is kept constant for soaking; and/or
in the soaking process of step 4), the strip steel or steel plate is subjected to a small increase in temperature or a small decrease in temperature during the soaking time period with the temperature not exceeding 850°C after the temperature increase and not falling below 750°C after the temperature decrease; and/or
the soaking time period is 10-20s.

15. The method according to claim 13, wherein, the method used for manufacturing the hot-dipped aluminum-zinc or hot-dipped zinc-aluminum-magnesium multiphase steel according to claim 7 comprises the following steps:

a) Smelting and casting
smelting and casting the above-mentioned chemical components into slabs;
b) Hot rolling and cooling
the hot rolling tapping temperature: 1150-1250 °C, the hot rolling finishing temperature: 830-890°C, the coiling temperature: 520-650 °C; after rolling, using laminar flow cooling with a laminar flow front section rapid cooling rate of 80-120 °C/s;
c) Pickling and cold rolling
after cooling, pickling the surface of strip steel to clean the mill scale, the cold rolling cumulative reduction rate being 60-80%;
d) Continuous annealing, hot-dipping aluminum-zinc, or hot-dipping zinc-aluminum-magnesium

a. Continuous annealing

performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section; when one-stage rapid heating is used, the heating rate is 30-300 °C/s; when two-stage rapid heating is used, heating is performed from room temperature to 550-625°C at a heating rate of 10-300°C/s in the first stage, and from 550-625°C to 750-840°C at a heating rate of 30-300°C/s in the second stage;

afterwards, performing soaking at a soaking temperature of 750-840 °C for a soaking time of 1-20s; then rapidly cooling to 550-600 °C at a cooling rate of 30-150 °C/s;

    b. Hot-dipping and cooling

after annealing, performing hot-dipping aluminum-zinc at a temperature of 550-600 °C; then rapidly cooling from 550-600 °C to room temperature at a cooling rate of 30-200 °C/s to obtain hot-dipped aluminum-zinc AZ products; or
after annealing, performing hot-dipping zinc-aluminum-magnesium at a temperature of 550-600 °C; then rapidly cooling from 550-600 °C to room temperature at a cooling rate of 30-180 °C/s to obtain hot-dipped zinc-aluminum-magnesium AM products;

    e) Finishing and straightening
the temper rolling rate: 0.25% ± 0.2, the straightening rate: 0.2% ± 0.2.

**16.** The method according to claim 15, wherein,

the whole process of the continuous annealing, hot-dipping aluminum-zinc, or hot-dipping zinc-aluminum-magnesium in step d) takes a time of 23-66s; and/or
in step b), the hot rolling tapping temperature is 1180-1220 °C; and/or
in step b), the hot rolling finishing temperature is 850-870 °C; and/or
in step b), the coiling temperature is 550-620 °C; and/or
in step b), the laminar flow front section rapid cooling rate is 100-120 °C/s; and/or
in step c), the cold rolling cumulative reduction rate is 60-70%; and/or
in step d), when one-stage heating is used in the rapid heating, the heating rate is 50-300 °C/s; and/or
in step d), when two-stage heating is used in the rapid heating, the heating is performed from room temperature to 550-625°C at a heating rate of 30-300°C/s in the first stage, and from 550-625°C to 750-840°C at a heating rate of 50-300°C/s in the second stage; and/or in the soaking process of step d), the strip steel or steel plate is heated to the target temperature of austenite and ferrite two-phase area; and the temperature is kept constant for soaking; and/or
in the soaking process of step d), the strip steel or steel plate is subjected to a small increase in temperature or a small decrease in temperature during the soaking time period with the temperature not exceeding 840°C after the temperature increase and not falling below 750°C after the temperature decrease; and/or
the soaking time period is 10-20s.

**17.** The method according to claim 13, wherein, the method used for manufacturing the hot-dipped aluminum-zinc or hot-dipped zinc-aluminum-magnesium multiphase steel according to claim 10 comprises the following steps:

    A) Smelting and casting
smelting and casting the above-mentioned chemical components into slabs;
    B) Hot rolling and cooling
the hot rolling tapping temperature: 1170-1250 °C, the hot rolling finishing temperature: 850-890°C, the coiling temperature: 550-680 °C; after rolling, using laminar cooling with a laminar cooling front section rapid cooling rate of 80-120 °C/s;
    C) Pickling and cold rolling
after cooling, pickling the surface of strip steel to clean the mill scale, the cold rolling cumulative reduction rate being 60-80%;
    D) Continuous annealing, hot-dipping aluminum-zinc, or hot-dipping zinc-aluminum-magnesium

        a. Continuous annealing

performing continuous annealing in the non-oxidation continuous annealing aluminum-zinc plating or zinc-aluminum-magnesium plating furnace; the annealing treatment sequentially including a heating section, a soaking section, and a pre-plating cooling section; wherein, one-stage or two-stage heating is used in the heating section; when one-stage rapid heating is used, the heating rate is 30-300 °C/s; when two-stage rapid heating is used, heating is performed from room temperature to 550-620°C at a heating rate of 10-300°C/s in the first stage, and from 550-620°C to 770-850°C at a heating rate of 30-300°C/s in the second stage;

afterwards, performing soaking at a soaking temperature of 770-850 °C for a soaking time of 1-20s; then rapidly cooling to 550-600 °C at a cooling rate of 30-150 °C/s;

b. Hot-dipping aluminum-zinc or hot-dipping zinc-aluminum-magnesium

after annealing, performing hot-dipping aluminum-zinc at a temperature of 550-600 °C; then rapidly cooling from 550-600 °C to room temperature at a cooling rate of 30-200 °C/s to obtain hot-dipped aluminum-zinc AZ products; or

after annealing, performing hot-dipping zinc-aluminum-magnesium at a temperature of 550-600 °C; then rapidly cooling from 550-600 °C to room temperature at a cooling rate of 30-180 °C/s to obtain hot-dipped zinc-aluminum-magnesium AM products;

E) Finishing and straightening
the temper rolling rate: 0.25% ± 0.2, the straightening rate: 0.2% ± 0.2.

18. The method according to claim 17, wherein,

the whole process of the continuous annealing, hot-dipping aluminum-zinc, or hot-dipping zinc-aluminum-magnesium in step D) takes a time of 22-80s; and/or
in step B), the hot rolling tapping temperature is 1180-1220 °C; and/or
in step B), the hot rolling finishing temperature is 860-880 °C; and/or
in step B), the coiling temperature is 570-620 °C; and/or
in step B), the laminar flow front section rapid cooling rate is 100-120 °C/s; and/or
in step C), the cumulative cold rolling reduction rate is 60-70%; and/or
in step D), when one-stage heating is used in the rapid heating, the heating rate is 50-300 °C/s; and/or
in step D), when two-stage heating is used in the rapid heating, the heating is performed from room temperature to 550-620 °C at a heating rate of 30-300 °C/s in the first stage, and from 550-620 °C to 770-850 °C at a heating rate of 50-300 °C/s in the second stage; and/or
in the soaking process of step D), the strip steel or steel plate is heated to the target temperature of austenite and ferrite two-phase area; and the temperature is kept constant for soaking; and/or
in the soaking process of step D), the strip steel or steel plate is subjected to a small increase in temperature or a small decrease in temperature during the soaking time period with the temperature not exceeding 850°C after the temperature increase and not falling below 770°C after the temperature decrease; and/or
the soaking time period is 10-20s.

Fig. 1

Fig. 2

Fig. 3

Fig. 4

Fig. 5

Fig. 6

Fig. 7

Fig. 8

Fig. 9

Fig. 10

## INTERNATIONAL SEARCH REPORT

| International application No. |
| --- |
| **PCT/CN2022/084541** |

| **A.** | **CLASSIFICATION OF SUBJECT MATTER** |
| --- | --- |

C22C 38/14(2006.01)i;  C23C 2/06(2006.01)i;  C22C 38/12(2006.01)i;  C23C 2/12(2006.01)i;  C22C 38/04(2006.01)i;
C21D 8/02(2006.01)i

According to International Patent Classification (IPC) or to both national classification and IPC

| **B.** | **FIELDS SEARCHED** |
| --- | --- |

Minimum documentation searched (classification system followed by classification symbols)

    C22C; C21D

Documentation searched other than minimum documentation to the extent that such documents are included in the fields searched

Electronic data base consulted during the international search (name of data base and, where practicable, search terms used)

    CNABS, CNTXT, CNKI, DWPI, EPODOC; 热镀锌, 分段, 加热, 连续退火, 屈服强度, hot galvaniz+, subsect+, section+, heat
+, continu+ anneal+, yield strength

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | CN 102492823 A (HANGHAI BAOYI CAN MANUFACTURING CO.,LTD.) 13 June 2012 (2012-06-13)<br>    description, paragraphs 9-11 and 22 | 1-18 |
| Y | CN 105088073 A (BAOSHAN IRON & STEEL CO., LTD.) 25 November 2015 (2015-11-25)<br>    description, paragraphs 12-17 and 27-39, and embodiments 1-6 | 1-6, 10-14, 17-18 |
| Y | CN 105063484 A (BAOSHAN IRON & STEEL CO., LTD.) 18 November 2015 (2015-11-18)<br>    description, paragraphs 11-16 and 29-45, and embodiments 1-6 | 1-9, 13-16 |
| Y | JP 2013076114 A (JFE STEEL CORP.) 25 April 2013 (2013-04-25)<br>    claims 1-8 | 1-6, 10-14, 17-18 |
| Y | CN 102199723 A (BAOSHAN IRON & STEEL CO., LTD.) 28 September 2011 (2011-09-28)<br>    claims 1 and 2 | 1-6, 10-14, 17-18 |
| Y | CN 108677093 A (PANZHIHUA IRON & STEEL RESEARCH INSTITUTE, PANGANG GROUP) 19 October 2018 (2018-10-19)<br>    claims 1-10 | 1-9, 13-16 |
| A | CN 106521341 A (WUHAN IRON AND STEEL CO., LTD.) 22 March 2017 (2017-03-22)<br>    entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 May 2022** | **29 June 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 317 514 A1

## INTERNATIONAL SEARCH REPORT
### Information on patent family members

International application No.

**PCT/CN2022/084541**

| Patent document cited in search report | | | Publication date (day/month/year) | Patent family member(s) | | | Publication date (day/month/year) |
|---|---|---|---|---|---|---|---|
| CN | 102492823 | A | 13 June 2012 | None | | | |
| CN | 105088073 | A | 25 November 2015 | MY | 186509 | A | 23 July 2021 |
| | | | | AU | 2016314896 | A1 | 05 April 2018 |
| | | | | RU | 2018112070 | A | 10 January 2020 |
| | | | | DE | 112016003925 | T5 | 24 May 2018 |
| | | | | CA | 2995720 | A1 | 09 March 2017 |
| | | | | US | 2018245176 | A1 | 30 August 2018 |
| | | | | WO | 2017036261 | A1 | 09 March 2017 |
| | | | | JP | 2018529842 | A | 11 October 2018 |
| | | | | KR | 20180043277 | A | 27 April 2018 |
| CN | 105063484 | A | 18 November 2015 | JP | 2018532043 | A | 01 November 2018 |
| | | | | US | 2018245175 | A1 | 30 August 2018 |
| | | | | DE | 112016003935 | T5 | 24 May 2018 |
| | | | | RU | 2018112072 | A | 10 January 2020 |
| | | | | AU | 2016314895 | A1 | 05 April 2018 |
| | | | | WO | 2017036260 | A1 | 09 March 2017 |
| | | | | KR | 20180048614 | A | 10 May 2018 |
| | | | | CA | 2995290 | A1 | 09 March 2017 |
| JP | 2013076114 | A | 25 April 2013 | KR | 20140068198 | A | 05 June 2014 |
| | | | | WO | 2013046695 | A1 | 04 April 2013 |
| | | | | EP | 2762580 | A1 | 06 August 2014 |
| | | | | TW | 201323626 | A | 16 June 2013 |
| | | | | US | 2014234655 | A1 | 21 August 2014 |
| | | | | CN | 103842540 | A | 04 June 2014 |
| CN | 102199723 | A | 28 September 2011 | None | | | |
| CN | 108677093 | A | 19 October 2018 | None | | | |
| CN | 106521341 | A | 22 March 2017 | None | | | |

Form PCT/ISA/210 (patent family annex) (January 2015)

**REFERENCES CITED IN THE DESCRIPTION**

**Patent documents cited in the description**

- CN 200710093976
- CN 201710323599
- CN 201710994660X
- CN 102363857 B
- CN 100529141 C
- CN 104060165 A
- CN 105063484 A
- CN 103361588 A
- CN 106811686 A